(19) Europäisches Patentamt
European Patent Office
Office européen des brevets

(11) EP 3 287 948 B1

(12) **EUROPEAN PATENT SPECIFICATION**

(45) Date of publication and mention of the grant of the patent:
**16.12.2020 Bulletin 2020/51**

(51) Int Cl.:
***G06K 9/00** (2006.01)*

(21) Application number: **17186676.7**

(22) Date of filing: **17.08.2017**

(54) **IMAGE PROCESSING APPARATUS, MOVING BODY APPARATUS CONTROL SYSTEM, IMAGE PROCESSING METHOD, AND PROGRAM**

BILDVERARBEITUNGSVORRICHTUNG, VORRICHTUNGSSTEUERUNGSSYSTEM FÜR BEWEGLICHEN KÖRPER, BILDVERARBEITUNGSVERFAHREN UND PROGRAMM

APPAREIL DE TRAITEMENT D'IMAGES, SYSTÈME DE COMMANDE D'APPAREIL DE CORPS MOBILE, PROCÉDÉ DE TRAITEMENT D'IMAGES ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2016 JP 2016161902**

(43) Date of publication of application:
**28.02.2018 Bulletin 2018/09**

(73) Proprietor: **Ricoh Company, Ltd.**
**Tokyo 143-8555 (JP)**

(72) Inventor: **MOTOHASHI, Naoki**
**Ohta-ku, Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**EP-A1- 3 057 063**
**US-A1- 2015 178 911**
**US-A1- 2016 014 406**

- **WU MEIQING ET AL: "Nonparametric Technique Based High-Speed Road Surface Detection", IEEE TRANSACTIONS ON INTELLIGENT TRANSPORTATION SYSTEMS, IEEE, PISCATAWAY, NJ, USA, vol. 16, no. 2, 1 April 2015 (2015-04-01), pages 874-884, XP011576974, ISSN: 1524-9050, DOI: 10.1109/TITS.2014.2345413 [retrieved on 2015-03-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 287 948 B1

## Description

1. Field of the Invention

The disclosures herein generally relate to an image processing apparatus, an image capturing apparatus, a moving body apparatus control system, an image processing method, and a program.

2. Description of the Related Art

Regarding vehicle safety, vehicle body structures have conventionally been developed from viewpoints of how to save pedestrians and how to protect vehicle passengers, if a collision with a pedestrian or a vehicle occurs. In recent years, however, according to advancements of information processing technology and image processing technology, techniques for detecting humans or vehicles at high speed have been developed. By utilizing such technologies, vehicles that apply automatic braking before a collision occurs to prevent the collision are already on the market.

To apply automatic braking, it is necessary to measure a distance from a vehicle to an object such as a human or another vehicle. For this reason, measurements using images of a stereo camera are used practically.

To detect an object such as a human or another vehicle, first, a road surface needs to be detected. Unless the road surface is detected correctly, the road surface might potentially be falsely recognized as a human or another vehicle, for example.

Japanese Unexamined Patent Application Publication No. 2011-128844 discloses a technique of detecting a road surface, even in a case where no traffic lane is marked, in accordance with the following processing. First, a frequency histogram is generated with a horizontal axis representing disparity values and a vertical axis representing frequencies of the disparity values. Next, the highest point in the disparity value frequencies is determined as a representative value of disparities in each of y-coordinates. Then, such a representative value is plotted on an imaginary plane to include a group of disparity points in a horizontal direction to correspond to each of y-coordinates in a disparity image, and is utilized for estimating road surfaces.

In the above-described related art, however, when detecting the road surface according to a disparity image, a disparity of an object other than the road surface might be erroneously determined to be a disparity of the road surface.

Therefore, it is an object to provide a technique of improving the accuracy for detecting a road surface.

EP 3 057 063 A1 discloses an object detection device that makes it possible to more accurately detect a road surface.

US 2016/014406 A1 discloses an object detection apparatus mountable to a moveable apparatus.

## SUMMARY OF THE INVENTION

The invention proposes an image processing apparatus for detecting a road surface as defined by claim 1, a corresponding method according to claim 10 and a program according to claim 11.

In one embodiment, an image processing apparatus includes: a plurality of image capturing units; a generating unit configured to generate, from a disparity image including disparity values, each corresponding to a distance to a road surface, obtained from a plurality of captured images respectively captured by the plurality of image capturing units, a frequency distribution of disparity values in the disparity image for each of a plurality of vertical positions in the disparity image transverse to a spacing direction of the image capturing units; a selecting unit configured to select candidate points based on the frequency distribution of disparity values; and a detecting unit configured to detect a road surface based on the sample points extracted from the candidate points that have been selected by the selecting unit, wherein the selecting unit selects the candidate points by, for each of a plurality of buffer ranges in the disparity image which are shifted in disparity value with respect to each other, adding up the frequencies of a plurality of disparity values included in the buffer range to form a respective addition value, and selecting the candidate points as the buffer range for which the addition value is highest.

The disclosed technique enables improvements in accuracy in detecting the road surface.

## BRIEF DESCRIPTION OF THE DRAWINGS

FIG. 1 is a diagram illustrating a configuration of an in-vehicle apparatus control system in one embodiment;

FIG. 2 is a diagram illustrating configurations of an image capturing unit and an image analyzing unit;

FIG. 3 is a functional block diagram of a moving body apparatus control system;

FIG. 4A and FIG. 4B illustrate disparity image data for describing a V map generated from the disparity image data;

FIG. 5A illustrates an image example of a captured image serving as a reference image that has been captured by one of imaging units;

FIG. 5B is a V map corresponding to the captured image of FIG. 5A;

FIG. 6A illustrates an image example of a captured image serving as a reference image that has been captured by one of imaging units;

FIG. 6B is a V map corresponding to the captured image of FIG. 6A;

FIG. 7 is a functional block diagram illustrating one example of a road surface estimating unit;

FIG. 8 is a flowchart illustrating one example of a process of selecting one or more candidate points in a first embodiment;

FIG. 9A and FIG. 9B are diagrams illustrating the process of selecting one or more candidate points in the first embodiment;

FIG. 10 is a view illustrating a case where disparities are extracted from the entire area in a disparity image and a V map is generated;

FIG. 11 is a flowchart illustrating one example of a sample point extracting process;

FIG. 12 is a flowchart illustrating one example of an out-of-range point removing process;

FIG. 13 is a diagram illustrating the out-of-range point removing process;

FIG. 14 is a flowchart illustrating one example of a process of selecting one or more candidate points in a second embodiment;

FIG. 15A and FIG. 15B are diagrams illustrating the process of selecting one or more candidate points in the second embodiment;

FIG. 16 is a diagram illustrating a process of selecting one or more candidate points in a third embodiment;

FIG. 17 is a flowchart illustrating one example of a process of selecting one or more candidate points in a fourth embodiment; and

FIG. 18A and FIG. 18B are diagrams illustrating a process of selecting one or more candidate points in the fourth embodiment.

## DESCRIPTION OF THE EMBODIMENTS

In the following, a moving body apparatus control system including an image processing apparatus will be described.

<First Embodiment

<Configuration of In-vehicle Apparatus Control System>

FIG. 1 is a diagram illustrating an in-vehicle apparatus control system serving as the moving body apparatus control system in one embodiment.

An in-vehicle apparatus control system 1 is mounted in a vehicle 100, such as a motor car serving as a moving body. The in-vehicle apparatus control system 1 includes an image capturing unit 500, an image analyzing unit 600, a display monitor 103, and a vehicle travel controlling unit 104. The image capturing unit 500 detects relative height information (information indicating a relatively sloping situation) of a road surface (a surface to be travelled) that is ahead of the vehicle serving as a moving body, from captured image data of an area (an image-captured area) ahead of the vehicle in a vehicle travelling direction. The image capturing unit 500 detects a three-dimensional shape on the surface to be travelled that is ahead of the vehicle from a detection result, and such that the moving body and various in-vehicle apparatuses are controlled using the detection result. Such controlling of the moving body includes, for example, an alarming notice, controlling of a steering wheel of the vehicle 100 (the moving body), or braking of the vehicle 100 (the moving body).

The image capturing unit 500 is, for example, disposed near a rear-view mirror (not illustrated) at a front windshield 105 of the vehicle 100. Various types of data such as captured image data obtained by capturing images using the image capturing unit 500 are input into the image analyzing unit 600, serving as an image processing unit.

The image analyzing unit 600 analyzes data transmitted from the image capturing unit 500, detects a relative height (positional information) of each point on the road surface to be travelled that is ahead of the vehicle, with respect to a road surface part on which the vehicle 100 is travelling (a road surface part located immediately below the vehicle), and identifies a three-dimensional shape of the road surface to be travelled that is ahead of the vehicle. Additionally, the image analyzing unit 600 recognizes recognition targets such as other vehicles, pedestrians, and various obstacles that are ahead of the vehicle.

Analysis results of the image analyzing unit 600 are sent to the display monitor 103 and to the vehicle travel controlling unit 104. The display monitor 103 displays the captured image data obtained by the image capturing unit 500 and the analysis results obtained by the image analyzing unit 600. The vehicle travel controlling unit 104 performs travel support control based on results of recognizing the recognition targets such as other vehicles, pedestrians, and various obstacles that are ahead of the vehicle, so as to issue an alarm to a driver of the vehicle 100, control the steering wheel of the vehicle, or control the brake of the vehicle.

<Configurations of Image Capturing Unit 500 and Image analyzing Unit 600>

FIG. 2 is a diagram illustrating configurations of the image capturing unit 500 and the image analyzing unit 600.

The image capturing unit 500 includes a stereo camera including two imaging units 510a and 510b, each serving as an imaging unit. Such two imaging units 510a and 510b are identical. The imaging units 510a and 510b respectively include: imaging lenses 511a and 511b; sensor substrates 514a and 514b respectively including image sensors 513a and 513b, in each of which a light receiving element is two-dimensionally arranged; and signal processing units 515a and 515b. The signal processing units 515a and 515b respectively generate captured image data obtained by converting analog electric signals (electric signals respectively corresponding to received light amounts received by the light receiving elements of the image sensors 513a and 513b) output from the sensor substrates 514a and 514b into digital electric signals, and respectively output the generated image data. The image capturing unit 500 outputs luminance image data and disparity image data.

The image capturing unit 500 also includes a processing hardware unit 510 including a Field-Programmable Gate Array (FPGA). The processing hardware unit 510 includes a disparity operating unit 511, serving as a disparity image information generating unit configured to perform an operation of a disparity value between corresponding image portions in the images respectively captured by the imaging units 510a and 510b, in order to obtain a disparity image from the luminance image data output from the imaging units 510a and 510b.

Herein, the disparity value is obtained by setting one of the images captured by the imaging units 510a and 510b to a reference image and the other one of the images captured by the imaging units 510a and 510b to a comparative image, and calculating a positional displacement amount of an image portion in the comparative image with respect to a corresponding image portion in the reference image, at identical points in both image captured areas, as a disparity value of the image portion. By utilizing the principle of triangulation, the distances to the identical points corresponding to the image portions in the image captured areas are calculated from the disparity value.

The image analyzing unit 600 is configured from an image processing substrate. The image analyzing unit 600 includes: a memory unit 601 including a RAM or a ROM for storing luminance image data and disparity image data output from the image capturing unit 500; a Central Processing Unit (CPU) 602 for running computer programs to perform a recognition process of recognizing a target or to perform disparity calculation control; a data interface (I/F) 603; and a serial interface (I/F) 604.

The FPGA for constituting the processing hardware unit 510 performs processing that necessitates a real-time performance for the image data, for example, gamma correction, distortion correction (averaging right and left captured images), and a disparity operation using block matching, generates information of a disparity image, and writes the information of the disparity image into the RAM of the image analyzing unit 600. The CPU 602 of the image analyzing unit 600 controls image sensor controllers of the imaging units 510a and 510b and the image processing substrate as a whole. Additionally, the CPU 602 of the image analyzing unit 600 loads, from the ROM, programs for performing a process of detecting a three-dimensional shape of a road surface and for performing a process of detecting various objects (recognition targets) including a guardrail and other objects, performs the processes using inputs of the luminance image data and the disparity image data stored in the RAM, and outputs results of the processes from the data I/F 603 and from the serial I/F 604 to the outside. In the case of performing the above processes, through the data I/F 603, vehicle operation information such as a vehicle speed, an acceleration (mainly generated in a vehicle front-rear direction), a steering angle, and a yaw rate of the vehicle 100 can be input and used as parameters of various processes. The data output to the outside may be used as input data to control various apparatuses (for brake control, vehicle speed control, and alarm control) in the vehicle 100.

Note that the image capturing unit 500 and the image analyzing unit 600 may be configured to be an imaging apparatus 2, which is integrally formed.

FIG. 3 is a functional block diagram of the in-vehicle apparatus control system 1, which is enabled by the processing hardware unit 510 and the image analyzing unit 600 illustrated in FIG. 2 and the vehicle travel controlling unit 104 illustrated in FIG. 1. Note that the functional units enabled by the image analyzing unit 600 are enabled by one or more programs installed in the image analyzing unit 600 being performed on the CPU 602 of the image analyzing unit 600.

Hereinafter, processes in one or more embodiments will be described.

<Disparity Image Generating Process>

A disparity image generating unit 11 performs a disparity image generating process of generating disparity image data (disparity image information). Note that the disparity image generating unit 11 is configured by, for example, the disparity operating unit 511 (FIG. 2).

In the disparity image generating process, first, luminance image data of the imaging unit 510a, which is one of the two imaging units 510a and 510b, is set as reference image data. Luminance image data of the imaging unit 510b, which is the other one of the two imaging units 510a and 510b, is set as comparative image data. By using the above data, a binocular disparity between the reference image data and the comparative image data is calculated to generate disparity image data, and the disparity image data is output. Such disparity image data is used for indicating a disparity image, in which pixel values respectively corresponding to disparity values d are calculated for respective image portions in the reference image data.

To be specific, the disparity image generating unit 11 defines a block including a plurality of pixels (e.g., 16 pixels × 1 pixel) with centering one focused pixel, in a certain line of the reference image data. Additionally, with respect to a same line of the comparative image data, while shifting a block having the same size with the size of the defined block in the reference image data on a pixel basis in a horizontal line direction (x direction), the disparity image generating unit 11 calculates each correlation value indicating a correlation between a characteristic quantity indicating a characteristic of a pixel value in the defined block in the reference image data and a characteristic quantity indicating a characteristic of a pixel value in each block in the comparative image data. By using the correlation values that have been calculated, the disparity image generating unit 11 performs a matching process of selecting a block in the comparative image data having a highest correlation with the block in the reference image data, from the blocks in the comparative image data. Subsequently, the disparity image generating unit 11 calculates a positional displacement amount between the focused pixel in the block in the reference image data and a corresponding pixel in the block in the comparative image data that has been selected by the matching process, as a disparity value d. By performing such a process of calculating the disparity values d for the entire area or a specific area in the reference image data, the disparity image generating unit 11 is capable of obtaining the disparity image data.

As a characteristic quantity of a block used for the matching process, for example, each pixel value (a luminance value) in the block can be used. As a correlation value, a total sum of absolute values of differences between, for example, pixel values (the luminance values) in a block in the reference image data and respectively corresponding pixel values (the luminance values) in the block in the comparative image data can be used. In this case, it can be considered that a block having the smallest total sum has the highest correlation.

In a case where the matching process performed by the disparity image generating unit 11 is enabled by hardware processing, for example, a method such as Sum of Squared Difference (SSD), Zero-mean Sum of Squared Difference (ZSSD), Sum of Absolute Difference (SAD), Zero-mean Sum of Absolute Difference (ZSAD), or Normalized Cross Correlation (NCC) can be utilized. Note that in the matching process, only a disparity value in units of pixels is calculated. Hence, in a case where a disparity value on a sub-pixel level smaller than one pixel is needed, an estimation value is to be used. To such an estimation method, for example, an isometric linear method or a quadratic curve method is applicable.

<V map Generating Process>

A V map generating unit 12 performs a V map generating process of generating a V map (a V-Disparity Map, which is one example of "vertical distribution data") based on the disparities extracted from a disparity image. Each piece of disparity pixel data included in the disparity image data is represented by a set of (x, y, d) including x direction (horizontal direction), y direction (vertical direction), and a disparity value d. Such a set is converted into three-dimensional coordinate information (d, y, f) where d is set to the X axis, y is set to the Y axis, and a frequency f is set to the Z axis, and is generated as disparity histogram information, or another type of three-dimensional coordinate information (d, y, f) that is limited to information exceeding a given frequency threshold is generated as the disparity histogram information. The disparity histogram information in one embodiment includes such three-dimensional coordinate information (d, y, f). The three-dimensional coordinate information that is distributed in an X-Y two-dimensional coordinate system is called a V map.

More specifically, the V map generating unit 12 calculates a disparity value frequency distribution for each of line areas obtained by vertically dividing the disparity image a plurality of times. Information indicating such a disparity value frequency distribution serves as the disparity histogram information.

FIG. 4A and FIG. 4B illustrate disparity image data for describing a V map generated from the disparity image data. Herein, FIG. 4A illustrates one example of a disparity value distribution in a disparity image. FIG. 4B is a diagram illustrating a V map indicating the disparity value distribution of the respective lines in the disparity image of FIG. 4A.

In a case where disparity image data having the disparity value distribution as illustrated in FIG. 4A is input, the V map generating unit 12 calculates a disparity value frequency distribution that is a distribution of the number of data of the disparity values in each line, and outputs the disparity value frequency distribution as the disparity histogram information. By representing information of the disparity value frequency distribution in each line that has been obtained as described above on a two-dimensional orthogonal coordinate system where the Y axis represents positions in the y direction of the disparity image (vertical positions of a captured image) and the X axis represents the disparity values d, a V map as illustrated in FIG. 4B is obtained. Such a V map can be represented as an image where pixels having pixel values corresponding to the frequency f are distributed on the two-dimensional orthogonal coordinate system.

FIG. 5A illustrates an image example of a captured image serving as a reference image that has been captured by one of the imaging units. FIG. 5B is a V map corresponding to the captured image of FIG. 5A. Here, FIG. 5A illustrates the captured image, and FIG. 5B illustrates the V map. That is to say, from the captured image illustrated in FIG. 5A, the V map illustrated in FIG. 5B is generated. In the V map, no disparity is detected below the road surface, and hence no disparity is counted in an area A indicated by diagonal lines.

In the image example illustrated in FIG. 5A, a road surface 401 on which a vehicle is travelling, a preceding vehicle 402 present ahead of the vehicle, and a power pole 403 present outside of the road are displayed. In the V map illustrated in FIG. 5B, a road surface 501, a preceding vehicle 502, and a power pole 503 corresponding to those in the image example are illustrated.

The image example illustrates a case where the road surface ahead of the vehicle is a relatively planar one, that is, the road surface ahead of the vehicle matches an imaginary reference road surface (an imaginary reference surface to be travelled) obtained by extending a plane parallel with a road surface part immediately below the vehicle in a direction ahead of the vehicle. In such a case, in a lower part in the V map corresponding to a lower part in the image, points with high frequencies are distributed in a shape of a substantially straight line having an inclination such that as the substantially straight line becomes closer to the top of the image, the disparity values d become smaller. Pixels conforming to such a distribution can be said to be present at approximately similar distances in the respective lines and to occupy the largest proportion in the disparity image. Additionally, the pixels can be considered to reflect a recognition target such that as the recognition target approaches the top of the image, the distance becomes longer in a continuous manner.

The imaging unit 510a is configured to capture images of areas ahead of the vehicle. Hence, with regard to contents in the captured images, as illustrated in FIG. 5A, as pixels approaches the top of an image, the disparity values d on the road surface become smaller. In the same line (the horizontal line), the pixels reflecting the road surface have approximately identical disparity values d. Hence, in the V map, the points with high frequencies that are distributed in a shape of a substantially straight line correspond to characteristics of the pixels reflecting the road surface (the surface to be travelled). Therefore, pixels of points distributed on an approximate straight line that is obtained by linearly approximating points that are high in frequency in the V map or points in the vicinity of the approximate straight line are estimated with high accuracy to be pixels reflecting the road surface. Additionally, the distance to a road surface part reflected in each pixel is calculated with high accuracy from the disparity value d of a corresponding point on the approximate straight line.

FIG. 6A illustrates an image example of an image captured by one of the imaging units, as a reference image, and FIG. 6B illustrates a V map of a given area corresponding to the captured image.

The V map generating unit 12 may generate a V map using all pixels in a disparity image, or may generate a V map using only pixels of a given area (e.g., an area where a road surface can be captured) in the disparity image (FIG. 6A is an example of a captured image serving as a basis for the disparity image). For example, since the road surface becomes narrower towards a vanishing point as the distance is farther, an area corresponding to the width of the road surface may be set, as illustrated in FIG. 6A. This prevents noise caused by an object (e.g., a power pole 403), which is located in any area other than the area where the road surface can be captured, from being mixed into the V map.

<Road Surface Estimation>

The road surface estimating unit 13 estimates (detects) a road surface based on the disparity image generated by the disparity image generating unit 11.

Then, referring to FIG. 7, one example of a functional configuration of the road surface estimating unit 13 will be described. FIG. 7 is a functional block diagram illustrating one example of the road surface estimating unit 13.

The road surface estimating unit 13 includes a selecting unit 130, a sample point extracting unit 131, an out-of-range point removing unit 132, a road surface shape detecting unit 133, a road surface supplementing unit 134, and a smoothing processing unit 135.

Hereinafter, processes of the respective functional units of the road surface estimating unit 13 will be described.

<Selecting Process>

The selecting unit 130 selects one or more candidate points for sample points to be used for estimating the road surface, from the V map generated by the V map generating unit 12.

Next, referring to FIG. 8, a selecting process to be performed by the selecting unit 130 for selecting one or more candidate points for sample points will be described. FIG. 8 is a flowchart illustrating one example of a process of selecting one or more candidate points for the sample points in the first embodiment.

Note that the selecting unit 130 performs the following process for every predefined y coordinate in a V map.

First, the selecting unit 130 sets a position of a horizontal buffer having a predefined size (e.g., three pixels) to one of ends (e.g., a left end) of the V map (step S1). Note that the size of the horizontal buffer may be determined depending on dispersion of disparities on the road surface. The size of the horizontal buffer, for example, may be a preset value, or may be changed for every frame of an image to be processed. In a case where the size is changed for each frame, for example, in a case where there is a horizontal inclination or the like and the road surface disparities disperse laterally, a horizontal buffer having a relatively large size may be used.

Subsequently, the selecting unit 130 calculates a sum of values in pixels included in the horizontal buffer in the above-described position (step S2). Note that a value in pixels indicates an occurring frequency of a disparity.

Subsequently, the selecting unit 130 moves (shifts) the position of the horizontal buffer laterally towards the other end (e.g., a right end) in the V map by a predefined number of pixels (e.g., one pixel) (step S3).

Subsequently, the selecting unit 130 calculates the sum of the values in the pixels included in the horizontal buffer in the current position (step S4).

Subsequently, the selecting unit 130 determines whether the position of the horizontal buffer has reached the other end of the V map (step S5).

In a case where the position has not reached the other end (NO in step S5), the process goes to step S3.

In a case where the position has reached the other end (YES in step S5), the selecting unit 130 selects a position where the sum of the values in the pixels included in the horizontal buffer is the maximum (step S6).

Note that instead of selecting such a position conforming to the maximum sum, a given number of positions may be selected in descending order of the sum.

Subsequently, the selecting unit 130 selects one or more pixels included in the horizontal buffer in the current position, as a candidate point for the sample points (step S7).

FIG. 9A and FIG. 9B are diagrams illustrating a process of selecting the candidate point for the sample points in the first embodiment. In FIG. 9A and FIG. 9B, one example of searching for disparities on a road surface using a horizontal buffer having a size of three pixels is illustrated.

In FIG. 9A, one example in which a horizontal buffer 551A shifts from the left end to the right end on a given y coordinate in a V map is illustrated.

FIG. 9B illustrates one example in which the sum of the value in pixels (disparity values) included in a horizontal buffer 551B is the maximum. In this case, the plurality of pixels included in the horizontal buffer 551B are selected as the candidate points for the sample points.

FIG. 10 is a diagram illustrating a case where disparities are extracted from the entire area in a disparity image to generate a V map.

When extracting a disparity on a road surface from a disparity image, an area where the road surface is displayed needs to be recognized correctly. In the above-described related art, such an area where the road surface is displayed cannot be recognized correctly.

For this reason, in a road surface estimating process to be described later, a case of detecting a road surface based on a most frequently occurring point that is highest in disparity frequency in a V map is considered. In a case where a traffic lane 571 is located higher than an embankment 572, that is, in a case where a distance from a camera to a road surface is shorter than a distance from the camera to the embankment, disparities extracted from the embankment are projected (distributed) on the left side in the V map, as compared to the disparities extracted relative to the road surface. Accordingly, a road surface 573 estimated using the disparities projected on the left side is lower than an actual road surface 574. In such a case, the disparities of the road surface might be erroneously recognized as an object present on the road surface, and might become a cause of an error alarm or error braking.

In a case of extracting disparities from a disparity image, a large number of disparities existing on a given y coordinate in the disparity image means that a large number of disparity frequencies exist on the road surface on a given y coordinate in a V map.

Additionally, there are many cases in which a group of disparities on the road surface that have been extracted from the disparity image are distributed with a relatively high density in the V map.

Therefore, in the first embodiment that has been described, accuracy in detecting a road surface is improved.

<Sample Point Extracting Process>

The sample point extracting unit 131 extracts one or more sample points used for estimating a road surface from one or more candidate points for the sample points selected by the selecting unit 130.

Note that in the following, a description will be given of one example where a V map is divided into a plurality of segments according to a disparity value (a distance value from a vehicle) to perform a sample point extracting process and a road surface shape detecting process. However, the sample point extracting process or the road surface shape detecting process may be performed without dividing a V map.

Next, with reference to FIG. 11, a detailed example of the sample point extracting process performed by the sample point extracting unit 131 will be described. FIG. 11 is a flowchart illustrating one example of the sample point extracting process.

First, the sample point extracting unit 131 divides a V map into a plurality of segments according to disparity values on a horizontal axis of the V map (step S11).

Subsequently, the sample point extracting unit 131 sets a range (a search range), in which sample points to be extracted are searched for, according to the disparity values on a horizontal axis of the V map (step S12). The sample point extracting unit 131 may set a search area to a rectangular area, for example.

Next, the sample point extracting unit 131 extracts one or more sample points from pixels included in the search range (step S13). The sample point extracting unit 131 may extract one or more sample points with respect to each coordinate position for each of the disparity values d from the pixels included in the search range. Alternatively, the sample point extracting unit 131 may extract a most frequently occurring point identified at the highest frequency, as a sample point, with respect to the coordinate position for each of the disparity values d from the pixels included in the search range. Alternatively, the sample point extracting unit 131 may extract one or more most frequently occurring points, as sample points, with respect to a plurality of coordinate positions including the disparity values d (e.g., a coordinate position of each disparity value d and at least one coordinate position on the right side or on the left side of the disparity value d) from the pixels included in the search range.

<Out-of-range Point Removing Process>

The out-of-range point removing unit 132 removes any point that is not suited for linear approximation from the sample points extracted by the sample point extracting unit 131.

Referring to FIG. 12 and FIG. 13, an out-of-range point removing process performed by the out-of-range point removing unit 132 will be described. FIG. 12 is a flowchart illustrating one example of the out-of-range point removing process. FIG. 13 is a diagram illustrating the out-of-range point removing process.

First, the out-of-range point removing unit 132 calculates an approximate straight line using the sample points in the segments extracted by the sample point extracting unit 131 or the sample points in all segments (step S20). The out-of-range point removing unit 132 calculates the approximate straight line using a least squares technique, for example. In the example of FIG. 13, an approximate straight line 541 is calculated in step S20 of FIG. 13.

Subsequently, the out-of-range point removing unit 132 calculates a threshold value corresponding to an x-coordinate value (step S21). In the example of FIG. 13, a boundary is set to a value D at a given x-coordinate (e.g., a disparity value corresponding to a distance of 50 m from a vehicle). A given threshold value smaller than the value D (longer than a given distance from the vehicle) is set to 2σ, and a given threshold value equal to or larger than the value D (equal to or shorter than the given distance from the vehicle) is set to σ. Such settings are made to set a moderate threshold value when removing points, because the road surface having a smaller disparity value, that is, the road surface at a position having a longer distance from the vehicle has a larger error in measuring using a stereo camera.

Subsequently, the out-of-range point removing unit 132 removes a sample point that is apart in distance from the calculated approximate straight line by the threshold value, which is calculated in step S21, or more (step S22). In the example of FIG. 13, the out-of-range point removing unit 132 removes a sample point 542, which has a larger value than the value D and which is apart by equal to or more than the threshold value σ. Note that a Euclidean distance or Mahalanobis' generalized distance may be used as a distance.

<Road Surface Shape Detecting Process>

The road surface shape detecting unit 133 detects the shape (position and height) of the road surface based on the sample points that have been extracted by the sample point extracting unit 131 and that have not been removed by the out-of-range point removing unit 132, from the segments in the V map that have been generated by the V map generating unit 12.

The road surface shape detecting unit 133 calculates an approximation straight line using the sample points in respective segments, for example, in a least squares method, and detects (estimates) the approximation straight line that has been calculated, as a road surface.

<Road Surface Supplementing Process>

The road surface supplementing unit 134 determines whether the road surface that has been detected (estimated) by the road surface shape detecting unit 133 or the road surface selected by a road surface determining unit 14 to be described below is valid or invalid. In the case of determining invalidity, the road surface supplementing unit 134 supplements the road surface.

The road surface supplementing unit 134 determines whether an invalid road surface that cannot have been captured by a stereo camera due to noise has been estimated. When determining that the invalid road surface has been estimated, the road surface supplementing unit 134 supplements (interpolates) such an invalid road surface using data of a default road surface or the road surface that has been estimated in a previous frame.

For example, in a V map, when data of a road surface having a sharp inclination to the lower left (the upper right being high) with a partial gradient of a given value or more is detected, the road surface supplementing unit 134 determines that the road surface is sloping down and a gradient becomes sharper in accordance with a longer distance from a vehicle. Then, the road surface supplementing unit 134 removes the data of such a road surface, and instead, supplements the data with the default road surface or the like.

<Smoothing Process>

The smoothing processing unit 135 modifies each road surface that has been estimated in each segment, so that the road surfaces become continuous with each other. The smoothing processing unit 135 changes inclinations and intercepts of the road surfaces such that in the road surfaces that have been estimated for adjacent two segments, an end point (a terminal point) of one of the road surfaces and a start point (another terminal point) of the other one of the road surfaces fit together.

<Road Surface Height Table Calculating Process>

The road surface height table calculating unit 15 performs a road surface height table calculating process, by calculating a road surface height (a relative height to a road surface part immediately below the vehicle) in accordance with the road surface in the segments that have been modified by the smoothing processing unit 135, and generating a table including road surface heights.

The road surface height table calculating unit 15 calculates a distance to a road surface part that is reflected in each line area in a captured image (each vertical position in the image), from the information of the road surface in each segment. Note that regarding an imaginary plane extending frontward in the vehicle travelling direction to be parallel with a road surface part located immediately below the vehicle, the line area in the captured image, on which each plane portion of such an imaginary plane extending in the vehicle travelling direction is reflected, is predetermined, and such an imaginary plane (a reference road surface) is represented by a straight line (a reference straight line) in a V map. The road surface height table calculating unit 15 compares the road surface in each segment with the reference straight line, and is capable of obtaining the height of each road surface part ahead of the vehicle. For simplification, from a Y axis position on the road surface in each segment, the road surface height table calculating unit 15 is capable of calculating the height of the road surface part present ahead of the vehicle only for a distance obtained from the disparity value corresponding to the Y axis position. The road surface height table calculating unit 15 generates a table including a needed disparity range of the heights of the road surface parts to be obtainable from the approximation straight line.

Note that regarding a certain disparity value d, the height from a road surface of an object reflected on an image-captured portion corresponding to a certain point where y' is a Y axis position can be calculated by (y'-y0) where y0 is a Y axis position on the road surface in such a disparity value d. Generally, a height H from the road surface to an object corresponding to coordinates (d, y') in a V map can be calculated in the following expression. However, in the following expression, "z" is a distance (z = BF/(d-offset)) calculated from the disparity value d, and "f" is a value obtained by converting a focal distance of the camera into the same unit as the unit of (y'-y0). Here, "BF" is a value obtained by multiplying a baseline length of the stereo camera by the focal distance, and "offset" is a disparity value when an object at an infinite distance is image-captured.

$$H = z \times (y' - y0)/f$$

<Clustering, Discarding, and Tracking>

Regarding a set (x, y, d) including an x-direction position, a y-direction position, and a disparity value d in each of disparity pixel data included in the disparity image data, a clustering unit 16 sets x to the X axis, d to the Y axis, and a frequency to the Z axis to generate X-Y two-dimensional histogram information (a frequency U map).

The clustering unit 16 generates a frequency U map only for points (x, y, d) in the disparity image within a given height range (e.g., from 20 cm to 3 m) of a height H from the road surface in accordance with heights in the road surface parts that have been included in the table by the road surface height table calculating unit 15. In such a case, objects present within such a given height range from the road surface are extracted as valid.

The clustering unit 16, detects an area where the number of frequencies is larger than a given value and disparities are dense in the frequency U map, as an area of an object, and applies individual information such as a type of the object (such as a person or a pedestrian) predicted from coordinates in a disparity image or an actual size of the object.

A discarding unit 17 discards information of an object that is not a recognition target, according to the disparity image, the frequency U map, and the individual information of the object.

A tracking unit 18 determines whether a detected object is a target to be tracked, in a case where the detected object appears continuously in plurality of frames in the disparity image.

<Travel Support Control>

A control unit 19 performs travel support control, according to a detection result of an object by the clustering unit 16. The control unit 19, for example, gives an alarm to the driver of the vehicle 100 or controls the steering wheel or the brake of the vehicle.

<Second Embodiment

In the above-described first embodiment, the description has been given of one example in which the selecting unit 130 selects one or more candidate points for the sample points to be used for estimating the road surface, using a one-dimensional horizontal buffer.

In a second embodiment, a description will be given of one example in which the selecting unit 130 selects one or more candidate points for the sample points to be used for estimating the road surface, using a two-dimensional buffer. Note that because the second embodiment is similar to the first embodiment except for some parts, descriptions will be omitted as appropriate.

In the following, regarding detailed processes of the in-vehicle apparatus control system 1 in the second embodiment, differences from the first embodiment will be described.

Next, referring to FIG. 14, a selecting process to be performed by the selecting unit 130 for selecting one or more candidate points for the sample points will be described. FIG. 14 is a flowchart illustrating one example of the selecting process of selecting one or more candidate points for the sample points in the second embodiment.

Step S201 to step S207 are the same as step S1 to step S7 of FIG. 8, but are different from FIG. 8 in that a two-dimensional buffer is used, instead of the horizontal buffer.

FIG. 15A and FIG. 15B are diagrams illustrating the selecting process of selecting one or more candidate points for the sample points in the second embodiment. FIG. 15A illustrates one example of searching for disparities on the road surface, using a two-dimensional buffer having a size of 3x3 pixels.

FIG. 15A illustrates one example in which a two-dimensional buffer 561A shifts from a left end to a right end on given y coordinates in a V map.

FIG. 15B illustrates one example in which the sum of the values in the pixels (disparity values) included in a two-dimensional buffer 561B is the maximum. A plurality of pixels included in the two-dimensional buffer 561B are selected as the candidate points for the sample points.

Use of the two-dimensional buffer becomes robust against noise, and thus the position of the disparity on a road surface is recognized with more accuracy. This is because disparities on a road surface easily appear with high frequency and high density, not only in a lateral direction but also in a vertical direction.

Note that the shape of the two-dimensional buffer is not limited to a square or a rectangle. For example, when a coordinate system is set such that disparities on a road surface incline from upper left in a V map, the two-dimensional buffer may have a stepwise shape that inclines from the upper left. Additionally, the two-dimensional buffer may have any size.

<Third Embodiment

In a third embodiment, a description will be given of one example in which the selecting unit 130 selects one or more candidate points for sample points to be used for estimating the road surface, from a given area in a V map. Note that because the third embodiment is similar to the first embodiment or the second embodiment except for some parts, descriptions will be omitted as appropriate.

In the following, regarding detailed processes of the in-vehicle apparatus control system 1 in the third embodiment, differences from the first embodiment and the second embodiment will be described.

When focusing on disparities on a line of a given y coordinate in a disparity image, the proportion of the disparities on the road surface tend to be larger than the proportion of the disparities on another object. However, in a case where an obstacle such as another vehicle is present immediately ahead of the vehicle, the proportion of the disparities on the road surface is smaller than the proportion of the disparities on such another vehicle, in some cases. In such cases, the road surface may be possibly estimated according to the disparities on such another vehicle or the like, not according to the disparities on the road surface.

Hence, the selecting unit 130 in the third embodiment limits a range where one or more candidate points for the sample points are searched, by using a reference road surface.

FIG. 16 is a diagram illustrating a selecting process of selecting one or more candidate points for the sample points in the third embodiment.

As illustrated in FIG. 16, on a given y coordinate in a disparity image, a distance from the vehicle to an object present on the road surface is shorter than a distance from the vehicle to the road surface.

That is, as illustrated in FIG. 16, on such a given y coordinate in the V map, disparities 583 on an object are distributed on the right side of disparities 584 on the road surface.

The selecting unit 130 in the third embodiment limits the range where one or more candidate points for the sample points are searched to an area 585 on the left side of a reference road surface 581 in the V map. Note that for the reference road surface, a default road surface assumed to be a planar road may be used, or a history road surface that has been calculated by a previous frame may be used. In a case of using the history road surface, for example, even when the road surface has upward and downward sloping, a searched range can be limited in a relatively suitable manner. Also, a gradient of a road surface to be detected is set beforehand, and such a gradient that has been converted into the road surface in a V map may be used as the reference road surface.

Note that in order to recognize disparities on a road surface with more accuracy, a second reference road surface 582 obtained by adding a given offset amount to the reference road surface 581 to shift the reference road surface 581 to the right side in a V map may be used.

The selecting unit 130 in the third embodiment selects the position having the maximum sum of the values in pixels included in a buffer in a limited area, by using the horizontal buffer or the two-dimensional buffer, as in the first embodiment or the second embodiment. Then, the selecting unit 130 selects one or more pixels included in the buffer in the above-described position, as candidate points for the sample points.

Note that the left end of the range where one or more candidate points for the sample points are searched in a V map is not necessarily the left end (d=0) in the V map. For example, any position on the left side of the reference road surface may be set as the left end of the range where one or more candidate points for the sample points are searched in the V map.

<Fourth Embodiment>

In a fourth embodiment, a description will be given of one example in which the selecting unit 130 selects one or more candidate points for sample points to be used for estimating the road surface, for every predefined disparity range in a V map. Note that because the fourth embodiment is similar to the first embodiment or the second embodiment except for some parts, descriptions will be omitted as appropriate.

In the following, regarding detailed processes of the in-vehicle apparatus control system 1 in the fourth embodiment, differences from the first embodiment and the second embodiment will be described.

Referring to FIG. 17, a selecting process to be performed by the selecting unit 130 for selecting one or more candidate points for the sample points will be described. FIG. 17 is a flowchart illustrating one example of a process of selecting one or more candidate points for the sample points in the fourth embodiment.

Step S301 to step S305 are similar to step S1 to step S5 of FIG. 8, or step S201 to step S205 of FIG. 14. In the fourth embodiment, as a buffer, the horizontal buffer may be used as in the first embodiment, or the two-dimensional buffer may be used as in the second embodiment.

In step S306, the selecting unit 130 in the fourth embodiment selects a position where the sum of the values in the pixels included in the buffer is the maximum for every predefined disparity range in a V map.

Subsequently, the selecting unit 130 selects the pixels included in the buffer in the above-described position, as the candidate points for the sample points (step S307).

FIG. 18A and FIG. 18B are diagrams illustrating a process of selecting one or more candidate points for sample points in the fourth embodiment. In FIG. 18A, an area in the disparity image from which disparities are extracted is set to three stages of rectangles that become gradually smaller in size as a distance becomes farther. This is because as the distance from the vehicle is farther, the area in the road surface included in the disparity image becomes smaller.

Additionally, FIG. 18A and FIG. 18B illustrate one example where a V map is divided into a plurality of segments according to a disparity d, so that the sample point extracting unit 131 extracts a sample point on the road surface from each of the segments.

When focusing on disparities on a line of a given y coordinate in a disparity image, the proportion of the disparities on the road surface tend to be larger than the proportion of the disparities on another object. However, in a case where an obstacle such as another vehicle is present immediately ahead of the vehicle, the proportion of the disparities on the road surface is smaller than the proportion of the disparities on such another vehicle, in some cases. In such cases, the road surface may be estimated according to the disparities on such another vehicle or the like, instead of the disparities on the road surface.

In such cases, in the first embodiment or the second embodiment, a group of disparity points 583, which have been extracted from a container part of a truck that is travelling ahead of the vehicle, may be selected as the candidate points for the sample points.

In a case where a group of disparity points 584 on the road surface are not selected as the candidate points for the sample points, the sample point extracting unit 131 is not capable of using the candidate points for the sample points to estimate the road surface.

Thus, in the fourth embodiment, the selecting unit 130 selects one or more candidate points for sample points for every predefined disparity range in a V map.

In the example of FIG. 18A, a predefined distance from the vehicle is set as a reference. The selecting unit 130 selects a position where the sum of the values in pixels included in the buffer is the maximum from an area that is closer to the vehicle (from the right side of the disparity 590 in the V map of FIG. 18A and FIG. 18B) than from a disparity 590 corresponding to a distance of the reference. Then, the selecting unit 130 selects pixels 591 included in the buffer in the above-described position, as candidate points for the sample points.

In an area that is farther than the reference (on the left side of the disparity 590 in the V map of FIG. 18A and FIG. 18B), the selecting unit 130 selects the position where the sum of the values in pixels included in the buffer is the maximum. The selecting unit 130 selects pixels 592 included in the buffer in the above-described position, as candidate points for the sample points.

In the example of FIG. 18A, more specifically, out of the three stages of rectangular areas in the disparity image from which disparities are extracted, a distance to a bottom end of the rectangle on the top stage is converted into a disparity, so that the selecting unit 130 selects a position where the sum of the values in pixels included in the buffer is the maximum, on the left-side area of a reference point that is the position of the disparity 590.

Note that regarding the area on the left side of the reference point, all disparity points included in the area may be selected as candidate points for the sample points. Note that regarding the area on the left side of the reference point, for example, in a similar manner to the third embodiment, any position on the left side of the reference road surface may be set as the left end of the range where one or more candidate points for the sample points are searched, in the V map.

FIG. 18B is a diagram illustrating one example of a selecting process in a case of using a captured image of a downslope ahead of the vehicle and a V map.

In the example of FIG. 18B, in a similar manner to the example of FIG. 18A, a pixel 597 included in a buffer is selected as a candidate point for sample points, from a near side of a disparity 590 (on the right side of the disparity 590 in the V maps in FIG. 18A and FIG. 18B).

In an area on the far side of the disparity 590 (on the left side of the disparity 590 in the V map of FIG. 18B), for each of segments 595A, 595B, and 595C to be used by the sample point extracting unit 131, a position where the sum of the values in pixels included in a buffer is the maximum is selected. Therefore, pixels 596A, 596B, and 596C respectively included in buffers in each of positions are selected as candidate points for the sample points.

Accordingly, even in the case of the downslope existing ahead of the vehicle, one or more candidate points for the sample points can be selected for each segment.

<Fifth Embodiment>

In a fifth embodiment, a description will be given of one example in which the selecting unit 130 selects one or more candidate points for sample points to be used for estimating a road surface according to turning information of the vehicle. Note that because the fifth embodiment is similar to the first to fourth embodiments except for some parts, descriptions will be omitted as appropriate.

In the following, regarding detailed processes of the in-vehicle apparatus control system 1 in the fifth embodiment, differences from the first to fourth embodiments will be described.

In a case where a traffic lane curves, an obstacle such as a sidewall is captured in an area of a disparity image from which disparities are extracted, and an area in which the road surface is captured may be reduced.

In such a case, the selecting unit 130 is capable of estimating the road surface relatively correctly, in some cases, by selecting all disparity points as candidate points for the sample points, instead of narrowing down the candidate points for the sample points.

Thus, the selecting unit 130 in the fifth embodiment determines whether the road surface (lane) on which the vehicle is travelling curves. In a case where the road surface curves, the selecting unit 130 selects all disparity points as the candidate points for the sample points.

The selecting unit 130 in the fifth embodiment may detect that the traffic lane curves through, for example, a data I/F 603, based on a steering angle (a steered angle of a steering wheel) acquired from Controller Area Network (CAN).

Alternatively, whether the traffic lane curves may be determined by using road data of the current position acquired from a map database according to current location information acquired through GPS, by using Vehicle Information and Communication System (VICS) (registered trademark).

Alternatively, whether the traffic lane curves may be determined by performing image recognition of white lines for the lane from data of captured images that have been captured by the image capturing unit 500.

<Conclusion>

In the embodiments described above, according to a density of disparity frequency, from a V map that has been generated from a disparity image having disparity values each corresponding to the distance to the road surface in the plurality of captured images that have been respectively captured by the plurality of imaging units, one or more candidate points for sample points to be used for detecting a road surface are selected.

Such a configuration enables improvements in the accuracy in detecting the road surface.

Note that because a value of a distance (distance value) and a disparity value can be treated equally, a disparity image has been used as one example of the distance image, in the descriptions in one or more embodiments, but the present disclosure is not limited to such one example. For example, a distance image may be generated by integrating distance information that has been generated by a detecting apparatus such as a millimeter wave radar, a laser radar, or the like, with a disparity image that has been generated by a stereo camera. A configuration for further improving the detection accuracy by using a stereo camera together with a detecting apparatus such as a millimeter wave radar, a laser radar, or the like, and combining with a detection result of an object that has been obtained by the above-described stereo camera.

The system configurations in the above-described embodiments are examples, and it is needless to say that various system configuration examples are applicable depending on an application or a purpose. Also, part or all of one or more embodiments can be combined together.

For example, because the processes of the out-of-range point removing unit 132, the road surface supplementing unit 134, and the smoothing processing unit 135 may not be necessarily included, a configuration that does not include the above-described functional parts may be applicable.

Additionally, each functional part of the processing hardware unit 510, the image analyzing unit 600, and the vehicle travel controlling unit 104 may be enabled by a hardware configuration, or may be enabled by the CPU running a program stored in a storage device. Such a program may be recorded and distributed in a computer-readable recording medium in an installable format or in an executable format. Additionally, as one example of such a recording medium, Compact Disc Recordable (CD-R), Digital Versatile Disk (DVD), Blu-ray Disc, and the like are included. Also, a recording medium such as a CD-ROM or the like in which each program is recorded and an HD 504 in which the programs are recorded may be supplied domestically or overseas as a program product (Program Product).

## Claims

**1.** An image processing apparatus for detecting a road surface, comprising:

a plurality of image capturing units (500);
a generating unit (12) configured to generate, from a disparity image including disparity values, each corresponding to a distance to a road surface, obtained from a plurality of captured images respectively captured by the plurality of image capturing units (500), a frequency distribution of disparity values in the disparity image for each of a plurality of vertical positions in the disparity image transverse to a spacing direction of the image capturing units (500);
a selecting unit (130) configured to select candidate road surface points from the generated frequency distribution of disparity values;
a sample point extracting unit (131) configured to extract sample points from the candidate road surface points;

an out-of-range point removing unit (132) configured to remove points from the sample points extracted by the sample point extracting unit; and

a detecting unit (133) configured to detect a road surface based on sample points extracted by the sample point extracting unit (131) that have not been removed by the out-of-range point removing unit (132),

wherein the selecting unit (130) selects the candidate road surface points by,

for each of a plurality of horizontal buffer ranges in the frequency distribution which are shifted in disparity value with respect to each other, for a given vertical position in the frequency distribution, adding up the frequencies of a plurality of disparity values included in the horizontal buffer range to form a respective addition value, and

selecting the candidate road surface points as the horizontal buffer ranges for which the addition value is highest;

and wherein the sample point extracting unit (131) is operative to set a search range in the frequency distribution and to extract sample points from candidate points in the search range, by extracting one or more points with respect to each disparity value in the search range,

and wherein the out-of-range point removing unit (132) is operative to calculate an approximate straight line in the frequency distribution using the sample points extracted by the sample point extracting unit (131) and to remove sample points lying further than a threshold value from the calculated straight line.

**2.** The image processing apparatus according to claim 1, wherein each horizontal buffer range further includes disparity values in a plurality of vertical positions.

**3.** The image processing apparatus according to claim 1 or 2, wherein the selecting unit (130) selects the candidate road surface points which have disparity values corresponding to a predetermined distance interval from the image processing apparatus.

**4.** The image processing apparatus according to claim 3, wherein the selecting unit (130) selects the candidate road surface points which have disparity values corresponding to a distance farther than a predefined distance from the image processing apparatus.

**5.** The image processing apparatus according to any one of claims 1 to 4, wherein the selecting unit (130) selects the candidate road surface points for every said vertical position.

**6.** The image processing apparatus according to claim 5, wherein the detecting unit (133) detects the road surface based on the sample points extracted from the candidate road surface points that have been selected by the selecting unit (130), for every said vertical position.

**7.** The image processing apparatus according to any one of claims 1 to 6,
wherein the selecting unit (130) determines whether the road surface curves, and
wherein the selecting unit (130) only selects said candidate road surface points if according to the determination the road surface does not curve.

**8.** The image processing apparatus according to any one of claims 1 to 7, further comprising:
a disparity image generating unit (11) configured to generate the disparity image from the plurality of captured images respectively captured by the plurality of image capturing units (500).

**9.** A moving body apparatus control system comprising:

the image processing apparatus according to claim 8;

wherein the plurality of image capturing units (500) are mounted in a moving body (100), and are configured to capture a plurality of images that are ahead of the moving body (100); and the system further comprises:

an object detecting unit configured to detect an object positioned on the road in the plurality of captured images, according to the road surface detected by the detecting unit (133) and the disparity image; and

a control unit configured to control the moving body, according to data that has been detected by the object detecting unit.

**10.** An image processing method for causing a computer to perform steps of:

generating, from a disparity image including disparity values, each corresponding to a distance to a road surface, obtained from a plurality of captured images respectively captured by a plurality of image capturing units (500), a frequency distribution of disparity values in the disparity image for each of a plurality of vertical positions in the disparity image transverse to a spacing direction of the image capturing units (500);

selecting candidate road surface points from the generated frequency distribution of disparity values by, for each of a plurality of horizontal buffer ranges in the frequency distribution which are shifted in disparity value with respect to each other, for a given vertical position in the frequency distribution, adding up the frequencies of a plurality of disparity values included in the horizontal buffer range to form a respective addition value, and selecting the candidate road surface points as the horizontal buffer range for which the addition value is highest;

extracting sample points from the candidate road surface points by setting a search range in the frequency distribution and extracting sample points from candidate points in the search range, by extracting one or more points with respect to each disparity value in the search range;

removing extracted sample points by calculating an approximate straight line in the frequency distribution using the extracted sample points and removing sample points lying further than a threshold value from the calculated straight line; and

detecting a road surface based on the sample points extracted from the candidate road surface points that have been selected and not removed.

**11.** A program for causing a computer to perform:

generating, from a disparity image including disparity values, each corresponding to a distance to a road surface, obtained from a plurality of captured images respectively captured by a plurality of image capturing units (500), a frequency distribution of disparity values in the disparity image for each of a plurality of vertical positions in the disparity image transverse to a spacing direction of the image capturing units (500);

selecting candidate road surface points from the generated frequency distribution of disparity values by, for each of a plurality of horizontal buffer ranges in the disparity image which are shifted in disparity value with respect to each other, for a given vertical position in the frequency distribution, adding up the frequencies of a plurality of disparity values included in the horizontal buffer range to form a respective addition value, and selecting the candidate road surface points as the horizontal buffer range for which the addition value is highest;

extracting sample points from the candidate road surface points by setting a search range in the frequency distribution and extracting sample points from the candidate points in the search range, by extracting one or more points with respect to each disparity value in the search range;

removing extracted sample points by calculating an approximate straight line in the frequency distribution using the extracted sample points and removing sample points lying further than a threshold value from the calculated straight line; and

detecting a road surface based on the sample points extracted from the candidate road surface points that have been selected and not removed.

## Patentansprüche

**1.** Bildverarbeitungsvorrichtung zum Ermitteln einer Straßenoberfläche, umfassend:

eine Vielzahl von Bildaufnahmeeinheiten (500);

eine Erzeugungseinheit (12), die dafür konfiguriert ist, aus einem Disparitätsbild, das Disparitätswerte einschließt, von denen jeder einem Abstand zu einer Straßenoberfläche entspricht, die aus einer Vielzahl von aufgenommenen Bildern erlangt wurde, die jeweils durch die Vielzahl von Bildaufnahmeeinheiten (500) aufgenommen wurden, eine Häufigkeitsverteilung von Disparitätswerten im Disparitätsbild für jede einer Vielzahl von vertikalen Positionen im Disparitätsbild quer zu einer Einteilungsrichtung der Bildaufnahmeeinheiten (500) zu erzeugen;

eine Auswahleinheit (130), die dafür konfiguriert ist, Kandidat-Straßenoberflächenpunkte aus der erzeugten Häufigkeitsverteilung von Disparitätswerten auszuwählen;

eine Abtastpunkt-Extraktionseinheit (131), die dafür konfiguriert ist, Abtastpunkte aus den Kandidat-Straßenoberflächenpunkten zu extrahieren;

eine Entfernungseinheit für Punkte außerhalb des Bereichs (132), die dafür konfiguriert ist, Punkte aus den durch die Abtastpunkt-Extraktionseinheit extrahierten Abtastpunkten zu entfernen; und

eine Ermittlungseinheit (133), die dafür konfiguriert ist, auf der Grundlage von durch die Abtastpunkt-Extraktionseinheit (131) extrahierten Abtastpunkten, die nicht durch die Entfernungseinheit für Punkte außerhalb des Bereichs (132) entfernt worden sind, eine Straßenoberfläche zu ermitteln,

wobei die Auswahleinheit (130) die Kandidat-Straßenoberflächenpunkte auswählt durch:

für jeden aus einer Vielzahl von horizontalen Pufferbereichen in der Häufigkeitsverteilung, die in ihrem Disparitätswert gegeneinander verschoben sind, für eine gegebene vertikale Position in der Häufigkeitsverteilung erfolgendes Addieren der Häufigkeiten einer Vielzahl von Disparitätswerten, die in dem horizontalen Pufferbereich eingeschlossen sind, um einen jeweiligen Additionswert zu bilden, und
Auswählen derjenigen Kandidat-Straßenoberflächenpunkte als die horizontalen Pufferbereiche, für die der Additionswert am höchsten ist;
und wobei die Abtastpunkt-Extraktionseinheit (131) betriebsfähig ist, einen Suchbereich in der Häufigkeitsverteilung festzulegen und Abtastpunkte aus Kandidatenpunkten im Suchbereich zu extrahieren, indem ein oder mehrere Punkte in Bezug auf jeden Disparitätswert im Suchbereich extrahiert werden,
und wobei die Entfernungseinheit für Punkte außerhalb des Bereichs (132) betriebsfähig ist, unter Verwendung der durch die Abtastpunkt-Extraktionseinheit (131) extrahierten Abtastpunkte eine annähernd gerade Linie in der Häufigkeitsverteilung zu berechnen und Abtastpunkte, die weiter als ein Schwellenwert von der berechneten geraden Linie liegen, zu entfernen.

**2.** Bildverarbeitungsvorrichtung nach Anspruch 1, wobei jeder horizontale Pufferbereich ferner Disparitätswerte in einer Vielzahl von vertikalen Positionen einschließt.

**3.** Bildverarbeitungsvorrichtung nach Anspruch 1 oder 2, wobei die Auswahleinheit (130) diejenigen Kandidat-Straßenoberflächenpunkte auswählt, welche Disparitätswerte aufweisen, die einem vorbestimmten Abstandsintervall von der Bildverarbeitungsvorrichtung entsprechen.

**4.** Bildverarbeitungsvorrichtung nach Anspruch 3, wobei die Auswahleinheit (130) diejenigen Kandidat-Straßenoberflächenpunkte auswählt, welche Disparitätswerte haben, die einem Abstand entsprechen, der weiter als ein vordefinierter Abstand von der Bildverarbeitungsvorrichtung ist.

**5.** Bildverarbeitungsvorrichtung nach einem der Ansprüche 1 bis 4, wobei die Auswahleinheit (130) die Kandidat-Straßenoberflächenpunkte für jede vertikale Position auswählt.

**6.** Bildverarbeitungsvorrichtung nach Anspruch 5, wobei die Ermittlungseinheit (133) die Straßenoberfläche auf der Grundlage derjenigen Abtastpunkte ermittelt, die aus den Kandidat-Straßenoberflächenpunkten extrahiert wurden, die durch die Auswahleinheit (130) ausgewählt worden sind, und zwar für jede vertikale Position.

**7.** Bildverarbeitungsvorrichtung nach einem der Ansprüche 1 bis 6,
wobei die Auswahleinheit (130) bestimmt, ob sich die Straßenoberfläche krümmt, und
wobei die Auswahleinheit (130) die Straßenoberflächenpunkt-Kandidaten nur dann auswählt, wenn sich die Straßenoberfläche gemäß der Bestimmung nicht krümmt.

**8.** Bildverarbeitungsvorrichtung nach einem der Ansprüche 1 bis 7, ferner umfassend:
eine Disparitätsbild-Erzeugungseinheit (11), die dafür konfiguriert ist, das Disparitätsbild aus der Vielzahl von aufgenommenen Bildern zu erzeugen, die jeweils durch die Vielzahl von Bildaufnahmeeinheiten (500) aufgenommen wurden.

**9.** Steuerungseinrichtung für eine Vorrichtung mit beweglichem Körper, umfassend:

die Bildverarbeitungsvorrichtung nach Anspruch 8;
wobei die Vielzahl von Bildaufnahmeeinheiten (500) in einem beweglichen Körper (100) angebracht ist und dafür konfiguriert ist, eine Vielzahl von Bildern aufzunehmen, die dem beweglichen Körper (100) voraus liegen; und das System ferner umfasst:

eine Objektermittlungseinheit, die dafür konfiguriert ist, in der Vielzahl von aufgenommenen Bildern ein auf der Straße positioniertes Objekt zu ermitteln, und zwar gemäß der durch die Ermittlungseinheit (133) ermittelten Straßenoberfläche und dem Disparitätsbild; und
eine Steuerungseinheit, die dafür konfiguriert ist, den beweglichen Körper gemäß Daten, die durch die Objektermittlungseinheit ermittelt worden sind, zu steuern.

**10.** Bildverarbeitungsverfahren zum Bewirken, dass ein Computer folgende Schritte durchführt:

aus einem Disparitätsbild, das Disparitätswerte einschließt, von denen jeder einem Abstand zu einer Straßenoberfläche entspricht, die aus einer Vielzahl von jeweils durch eine Vielzahl von Bildaufnahmeeinheiten (500) aufgenommenen Bildern erlangt wurde, erfolgendes Erzeugen einer Häufigkeitsverteilung von Disparitätswerten im Disparitätsbild für jede aus einer Vielzahl von vertikalen Positionen im Disparitätsbild quer zu einer Einteilungsrichtung der Bildaufnahmeeinheiten (500);
Auswählen von Kandidat-Straßenoberflächenpunkten aus der erzeugten Häufigkeitsverteilung von Disparitätswerten, und zwar durch: für jeden aus einer Vielzahl von horizontalen Pufferbereichen in der Häufigkeitsverteilung, die im Disparitätswert gegeneinander verschoben sind, für eine gegebene vertikale Position in der Häufigkeitsverteilung erfolgendes Addieren der Häufigkeiten einer Vielzahl von Disparitätswerten, die in dem horizontalen Pufferbereich eingeschlossen sind, um einen jeweiligen Additionswert zu bilden, und Auswählen derjenigen Kandidat-Straßenoberflächenpunkte als der horizontale Pufferbereich, für den der Additionswert am höchsten ist;

Extrahieren von Abtastpunkten aus den Kandidat-Straßenoberflächenpunkten durch Festlegen eines Suchbereichs in der Häufigkeitsverteilung und Extrahieren von Abtastpunkten aus Kandidatenpunkten im Suchbereich, und zwar durch Extrahieren eines oder mehrerer Punkte in Bezug auf jeden Disparitätswert im Suchbereich;

Entfernen extrahierter Abtastpunkte durch Berechnen einer annähernd geraden Linie in der Häufigkeitsverteilung unter Verwendung der extrahierten Abtastpunkte und Entfernen von Abtastpunkten, die ferner als ein Schwellenwert von der berechneten Gerade liegen; und

Ermitteln einer Straßenoberfläche auf der Grundlage derjenigen Abtastpunkte, die aus den Kandidat-Straßenoberflächenpunkten extrahiert wurden, die ausgewählt und nicht entfernt worden sind.

**11.** Programm zum Bewirken, dass ein Computer Folgendes durchführt:

aus einem Disparitätsbild, das Disparitätswerte einschließt, von denen jeder einem Abstand zu einer Straßenoberfläche entspricht, die aus einer Vielzahl von jeweils durch eine Vielzahl von Bildaufnahmeeinheiten (500) aufgenommenen Bildern erlangt wurde, erfolgendes Erzeugen einer Häufigkeitsverteilung von Disparitätswerten im Disparitätsbild für jede aus einer Vielzahl von vertikalen Positionen im Disparitätsbild quer zu einer Einteilungsrichtung der Bildaufnahmeeinheiten (500);

Auswählen von Kandidat-Straßenoberflächenpunkten aus der erzeugten Häufigkeitsverteilung von Disparitätswerten, und zwar durch: für jeden aus einer Vielzahl von horizontalen Pufferbereichen in der Häufigkeitsverteilung, die im Disparitätswert gegeneinander verschoben sind, für eine gegebene vertikale Position in der Häufigkeitsverteilung erfolgendes Addieren der Häufigkeiten einer Vielzahl von Disparitätswerten, die in dem horizontalen Pufferbereich eingeschlossen sind, um einen jeweiligen Additionswert zu bilden, und Auswählen derjenigen Kandidat-Straßenoberflächenpunkte als der horizontale Pufferbereich, für den der Additionswert am höchsten ist;

Extrahieren von Abtastpunkten aus den Kandidat-Straßenoberflächenpunkten durch Festlegen eines Suchbereichs in der Häufigkeitsverteilung und Extrahieren von Abtastpunkten aus Kandidatenpunkten im Suchbereich durch Extrahieren eines oder mehrerer Punkte in Bezug auf jeden Disparitätswert im Suchbereich;

Entfernen extrahierter Abtastpunkte durch Berechnen einer annähernd geraden Linie in der Häufigkeitsverteilung unter Verwendung der extrahierten Abtastpunkte und Entfernen von Abtastpunkten, die ferner als ein Schwellenwert von der berechneten Gerade liegen; und

Ermitteln einer Straßenoberfläche auf der Grundlage derjenigen Abtastpunkte, die aus den Kandidat-Straßenoberflächenpunkten extrahiert wurden, die ausgewählt und nicht entfernt worden sind.

## Revendications

**1.** Appareil de traitement d'image permettant de détecter une surface de la route, comprenant :

une pluralité d'unités de capture d'image (500) ;

une unité de génération (12) configurée pour générer, à partir d'une image de disparité incluant des valeurs de disparité, chacune correspondant à une distance par rapport à une surface de la route, obtenue à partir d'une pluralité d'images capturées, respectivement capturées par la pluralité d'unités de capture d'image (500), une distribution de fréquence de valeurs de disparité dans l'image de disparité pour chacune d'une pluralité de positions verticales dans l'image de disparité transversale à une direction d'espacement des unités de capture d'image (500) ;

une unité de sélection (130) configurée pour sélectionner des points de surface de route candidats à partir de la distribution de fréquence générée des valeurs de disparité ;

une unité d'extraction de point d'échantillon (131) configurée pour extraire des points d'échantillon des points de surface de route candidats ;

une unité d'enlèvement de point hors de portée (132) configurée pour enlever des points des points d'échantillon extraits par l'unité d'extraction de point d'échantillon ; et

une unité de détection (133) configurée pour détecter une surface de la route sur la base de points d'échantillon extraits par l'unité d'extraction de point d'échantillon (131) qui n'ont pas été enlevés par l'unité d'enlèvement de point hors de portée (132),

dans lequel l'unité de sélection (130) sélectionne les points de surface de route candidats par, pour chacune d'une pluralité de plages de tampon horizontales dans la distribution de fréquence qui sont déplacés en valeur de disparité les unes par rapport aux autres, pour une position verticale donnée dans la distribution de fréquence, l'ajout des fréquences d'une pluralité de valeurs de disparité incluses dans la plage de tampon horizontale afin de former une valeur d'addition respective, et
la sélection des points de surface de route candidats comme plages de tampon horizontales pour lesquelles la valeur d'addition est la plus élevée ;
et dans lequel l'unité d'extraction de points d'échantillon (131) est opérationnelle pour établir une plage de recherche dans la distribution de fréquence et pour extraire des points d'échantillon à partir de points candidats dans la plage de recherche, en extrayant un ou plusieurs points relativement à chaque valeur de disparité dans la plage de recherche,
et dans lequel l'unité d'enlèvement de point hors de portée (132) est opérationnelle pour calculer une ligne droite approximative dans la distribution de fréquence en utilisant les points d'échantillon extraits par l'unité d'extraction de point d'échantillon (131) et pour ôter des points d'échantillon situés plus loin qu'une valeur de seuil de la ligne droite calculée.

**2.** Appareil de traitement d'image selon la revendication 1, dans lequel chaque plage de tampon horizontale inclut en outre des valeurs de disparité dans une pluralité de positions verticales.

**3.** Appareil de traitement d'image selon la revendication 1 ou 2, dans lequel l'unité de sélection (130) sélectionne les points de surface de route candidats qui présentent des valeurs de disparité correspondant à un intervalle de distance prédéterminé à partir de l'appareil de traitement d'image.

**4.** Appareil de traitement d'image selon la revendication 3, dans lequel l'unité de sélection (130) sélectionne les points de surface de route candidats qui présentent des valeurs de disparité correspondant à une distance plus éloignée qu'une distance prédéfinie de l'appareil de traitement d'image.

**5.** Appareil de traitement d'image selon l'une quelconque des revendications 1 à 4, dans lequel l'unité de sélection (130) sélectionne les points de surface de route candidats pour chacune de ladite position verticale.

**6.** Appareil de traitement d'image selon la revendication 5, dans lequel l'unité de détection (133) détecte la surface de la route sur la base des points d'échantillon extraits des points de surface de route candidats qui ont été sélectionnés par l'unité de sélection (130), pour chacune de ladite position verticale.

**7.** Appareil de traitement d'image selon l'une quelconque des revendications 1 à 6,
dans lequel l'unité de sélection (130) détermine si la surface de la route s'incurve, et
dans lequel l'unité de sélection (130) sélectionne uniquement lesdits points de surface de route candidats si selon la détermination, la surface de la route ne s'incurve pas.

**8.** Appareil de traitement d'image selon l'une quelconque des revendications 1 à 7, comprenant en outre : une unité de génération d'image de disparité (11) configurée pour générer l'image de disparité de la pluralité d'images capturées respectivement capturées par la pluralité d'unités de capture d'image (500).

**9.** Système de commande d'appareil de corps mobile comprenant :

l'appareil de traitement d'image selon la revendication 8 ;
dans lequel la pluralité d'unités de capture d'image (500) sont montées dans un corps mobile (100), et sont configurées pour capturer une pluralité d'images qui sont au-delà du corps mobile (100) ; et le système comprend en outre :

une unité de détection d'objet configurée pour détecter un objet positionné sur la route dans la pluralité d'images capturées, selon la surface de la route détectée par l'unité de détection (133) et l'image de disparité ; et
une unité de commande configurée pour commander le corps mobile, selon des données qui ont été détectées par l'unité de détection d'objet.

**10.** Procédé de traitement d'image permettant d'amener un ordinateur à effectuer des étapes consistant à :

générer, à partir d'une image de disparité incluant des valeurs de disparité, chaque valeur correspondant à une distance par rapport à la surface de la route, obtenue à partir d'une pluralité d'images capturées respectivement capturées par une pluralité d'unités de capture d'image (500), une distribution de fréquence de valeurs de disparité dans l'image de disparité pour chacune d'une pluralité de positions verticales dans l'image de disparité transversale à une direction d'espacement des unités de capture d'image (500) ;

sélectionner des points de surface de route candidats à partir de la distribution de fréquence générée de valeurs de disparité par, pour chacune d'une pluralité de plaques de tampon horizontales dans la distribution de fréquence qui sont déplacés dans une valeur de disparité les unes par rapport aux autres, pour une position verticale donnée dans la distribution de fréquence, l'ajout des fréquences d'une pluralité de valeurs de disparité incluses dans la plage de tampon horizontale afin de former une valeur d'addition respective, et sélectionner des points de surface de route candidats comme plage de tampon horizontale pour laquelle la valeur d'addition est la plus élevée ;

extraire des points d'échantillon des points de surface de route candidats en établissant une plage de recherche dans la distribution de fréquence et extraire des points d'échantillon à partir de points candidats dans la plage de recherche, en extrayant un point ou plus relativement à chaque valeur de disparité dans la plage de recherche ;

éliminer des points d'échantillon extraits en calculant une ligne droite approximative dans la distribution de fréquence en utilisant les points d'échantillon extraits et en éliminant les points d'échantillon situés au-delà d'une valeur de seuil à partir de la ligne droite calculée ; et

détecter une surface de la route sur la base des points d'échantillon extraits des points de surface de route candidats qui ont été sélectionnés et non éliminés.

**11.** Programme permettant d'amener un ordinateur à effectuer :

la génération, à partir d'une image de disparité incluant des valeurs de disparité, de chaque valeur correspondant à une distance par rapport à la surface de la route, obtenue à partir d'une pluralité d'images capturées respectivement capturées par une pluralité d'unités de capture d'image (500), une distribution de fréquence de valeurs de disparité dans l'image de disparité pour chacune d'une pluralité de positions verticales dans l'image de disparité transversale à une direction d'espacement des unités de capture d'image (500) ;

la sélection de points de surface de route candidats à partir de la distribution de fréquence générée de valeurs de disparité par, pour chacune d'une pluralité de plaques de tampon horizontales dans la distribution de fréquence qui sont déplacés dans une valeur de disparité les unes par rapport aux autres, pour une position verticale donnée dans la distribution de fréquence, l'ajout des fréquences d'une pluralité de valeurs de disparité incluses dans la plage de tampon horizontale afin de former une valeur d'addition respective, et la sélection des points de surface de route candidats comme plage de tampon horizontale pour laquelle la valeur d'addition est la plus élevée ;

l'extraction de points d'échantillon des points de surface de route candidats en établissant une plage de recherche dans la distribution de fréquence et l'extraction de points d'échantillon à partir de points candidats dans la plage de recherche, en extrayant un point ou plus relativement à chaque valeur de disparité dans la plage de recherche ;

l'élimination des points d'échantillon extraits en calculant une ligne droite approximative dans la distribution de fréquence en utilisant les points d'échantillon extraits et en éliminant les points d'échantillon situés au-delà d'une valeur de seuil à partir de la ligne droite calculée ; et

la détection d'une surface de la route sur la base des points d'échantillon extraits des points de surface de route candidats qui ont été sélectionnés et non éliminés.

FIG.1

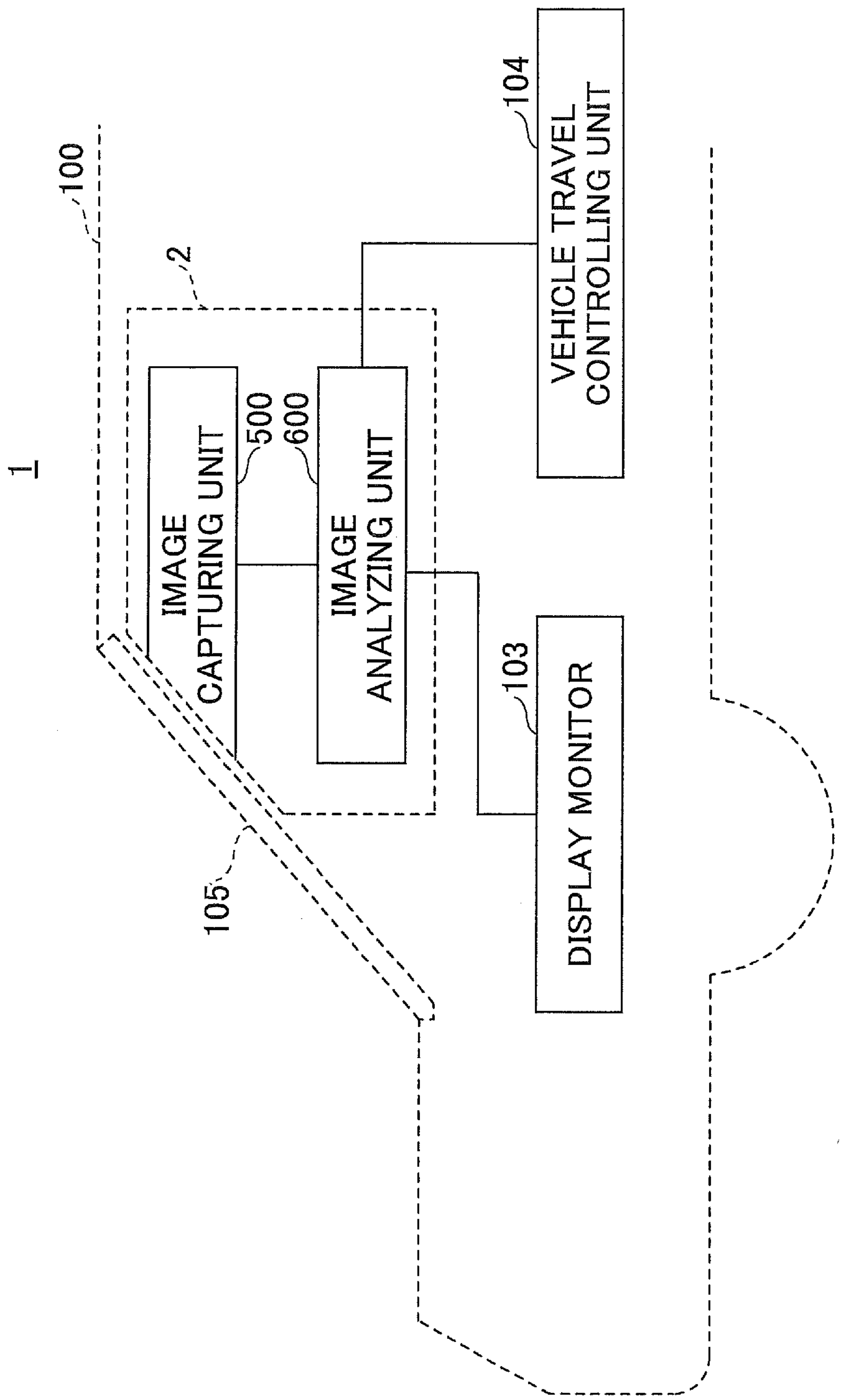
1
100
2
IMAGE CAPTURING UNIT
500
600
IMAGE ANALYZING UNIT
VEHICLE TRAVEL CONTROLLING UNIT
104
DISPLAY MONITOR
103
105

FIG.2

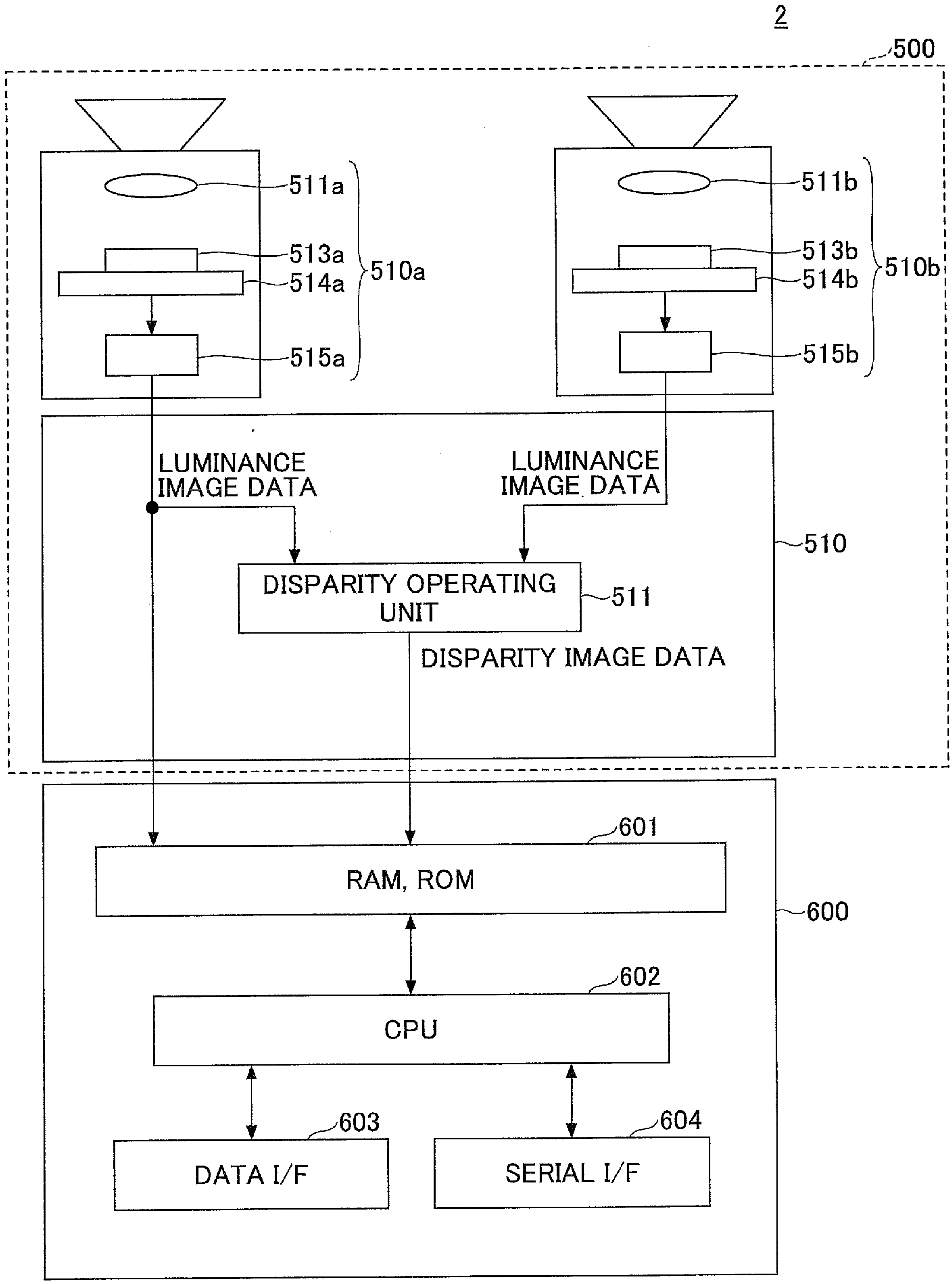
2
500
511a
513a
514a
515a
510a
511b
513b
514b
515b
510b
LUMINANCE IMAGE DATA
LUMINANCE IMAGE DATA
510
DISPARITY OPERATING UNIT
511
DISPARITY IMAGE DATA
601
RAM, ROM
600
602
CPU
603
DATA I/F
604
SERIAL I/F

FIG.3

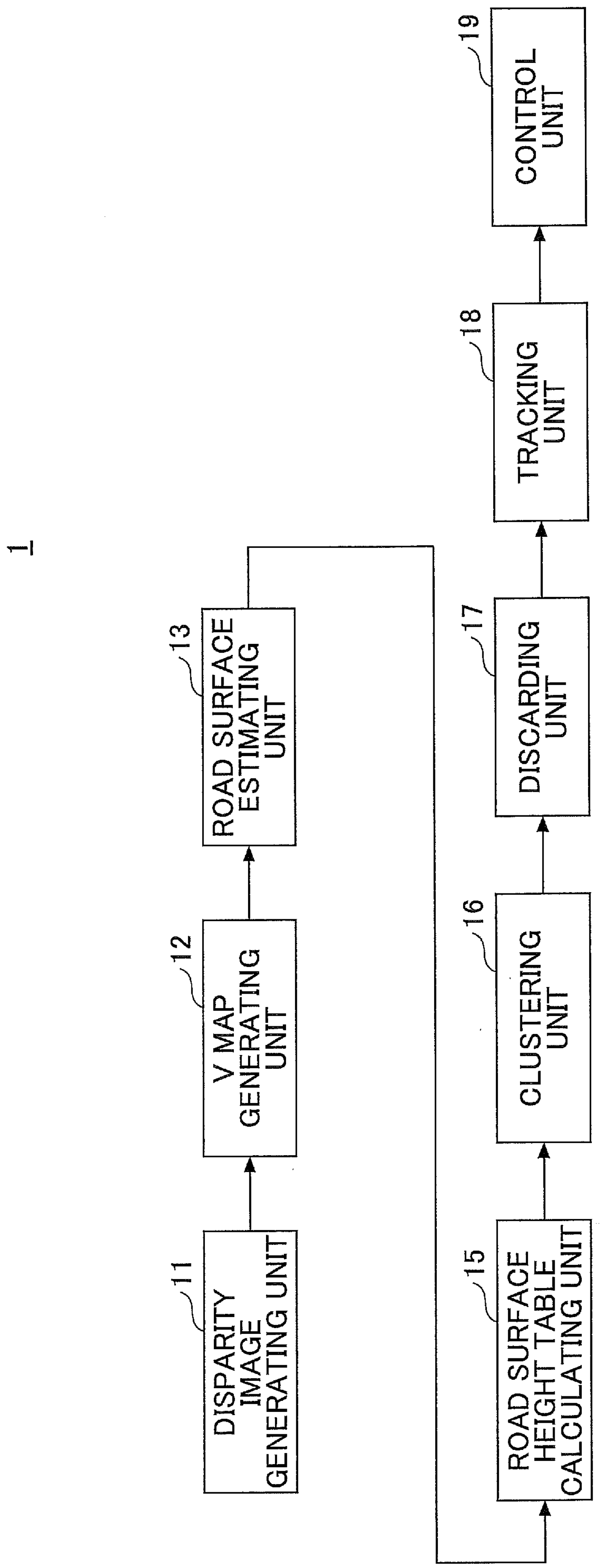
1
11
DISPARITY IMAGE GENERATING UNIT
12
V MAP GENERATING UNIT
13
ROAD SURFACE ESTIMATING UNIT
15
ROAD SURFACE HEIGHT TABLE CALCULATING UNIT
16
CLUSTERING UNIT
17
DISCARDING UNIT
18
TRACKING UNIT
19
CONTROL UNIT

FIG.4A

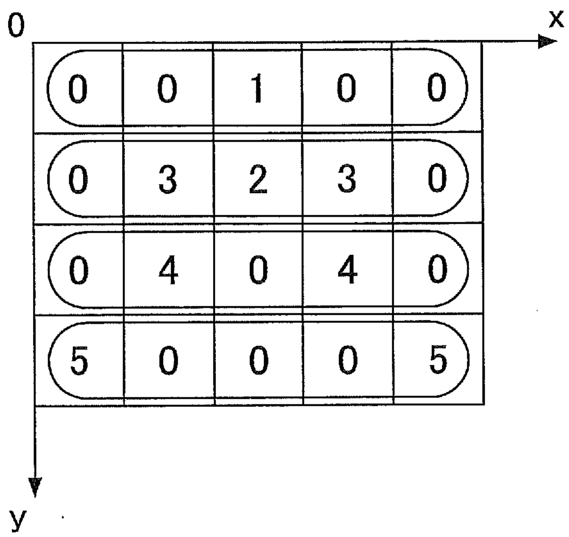
0
x
0 0 1 0 0
0 3 2 3 0
0 4 0 4 0
5 0 0 0 5
y

FIG.4B

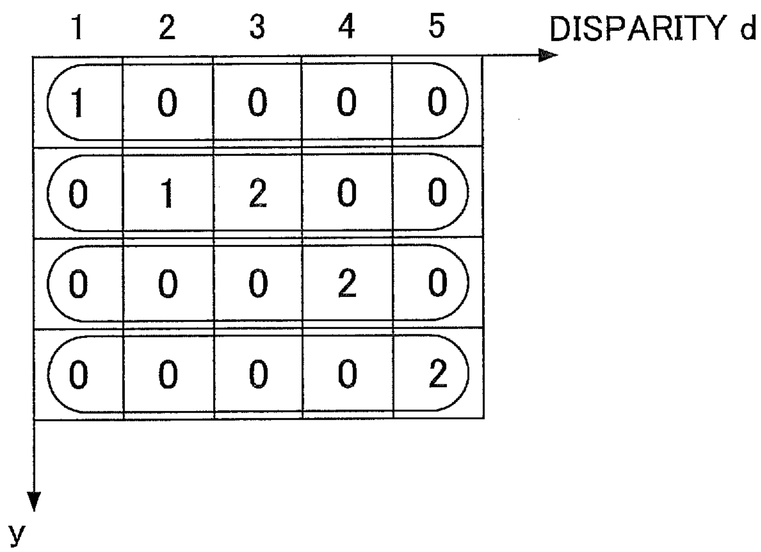
1 2 3 4 5
DISPARITY d
1 0 0 0 0
0 1 2 0 0
0 0 0 2 0
0 0 0 0 2
y

FIG.5A

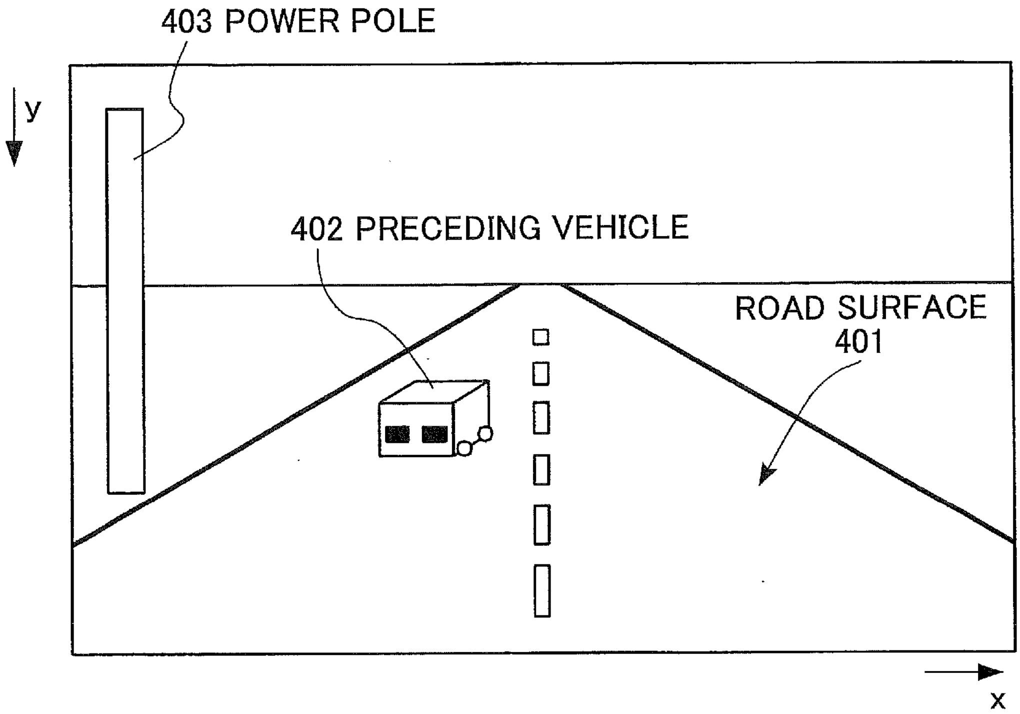
403 POWER POLE
y
402 PRECEDING VEHICLE
ROAD SURFACE
401
x

FIG.5B

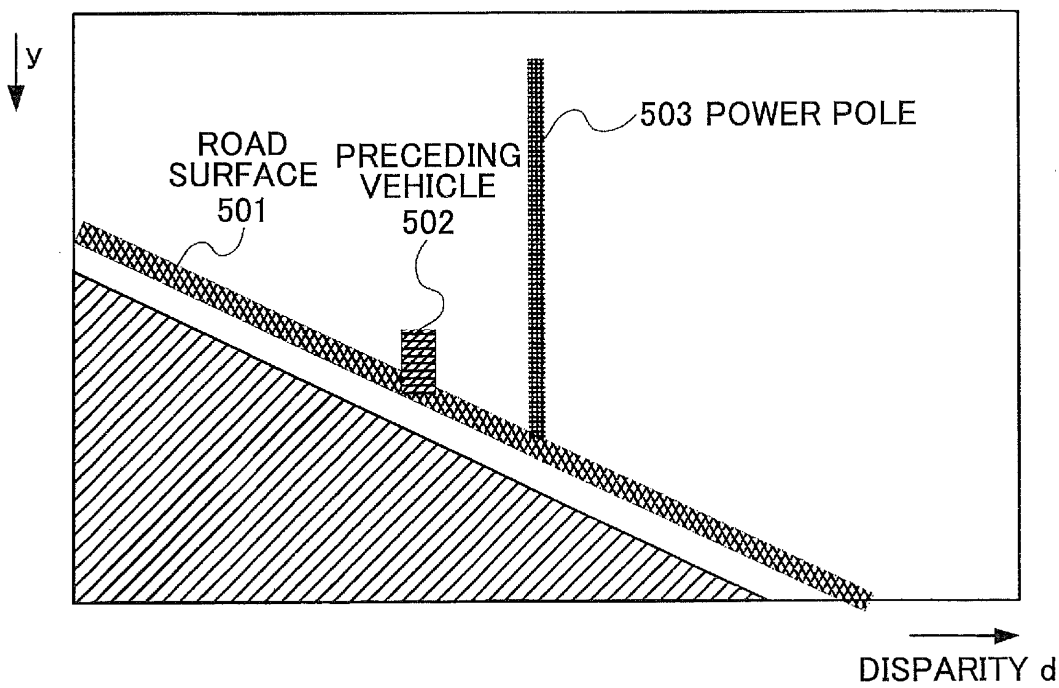
y
503 POWER POLE
ROAD
SURFACE
501
PRECEDING
VEHICLE
502
DISPARITY d

FIG.6A

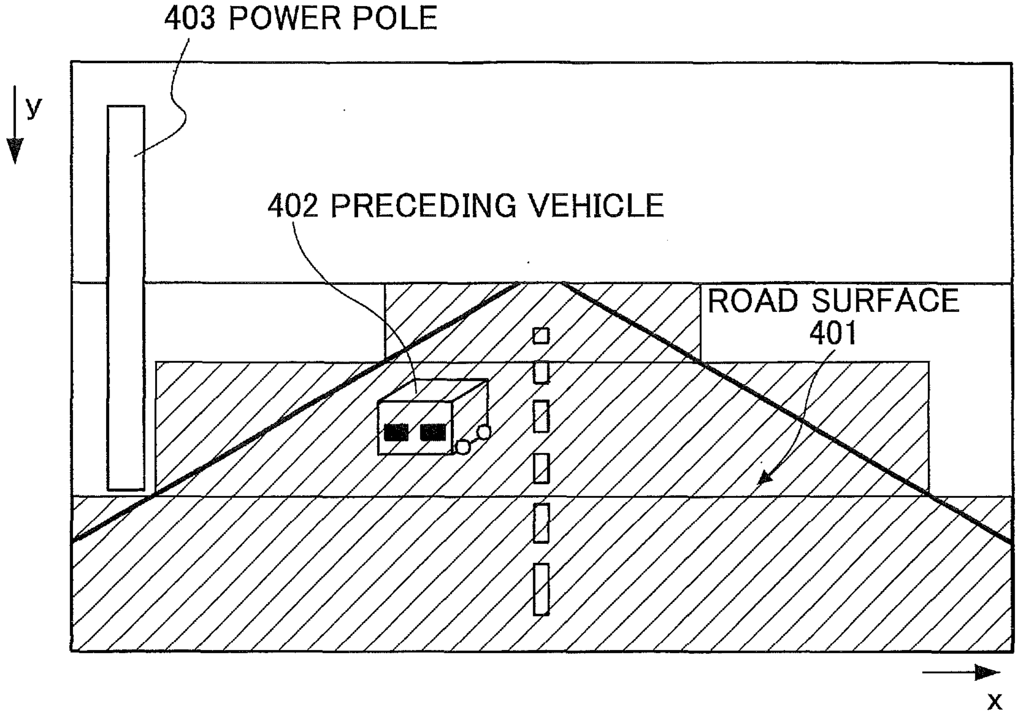
403 POWER POLE
y
402 PRECEDING VEHICLE
ROAD SURFACE
401
x

FIG.6B

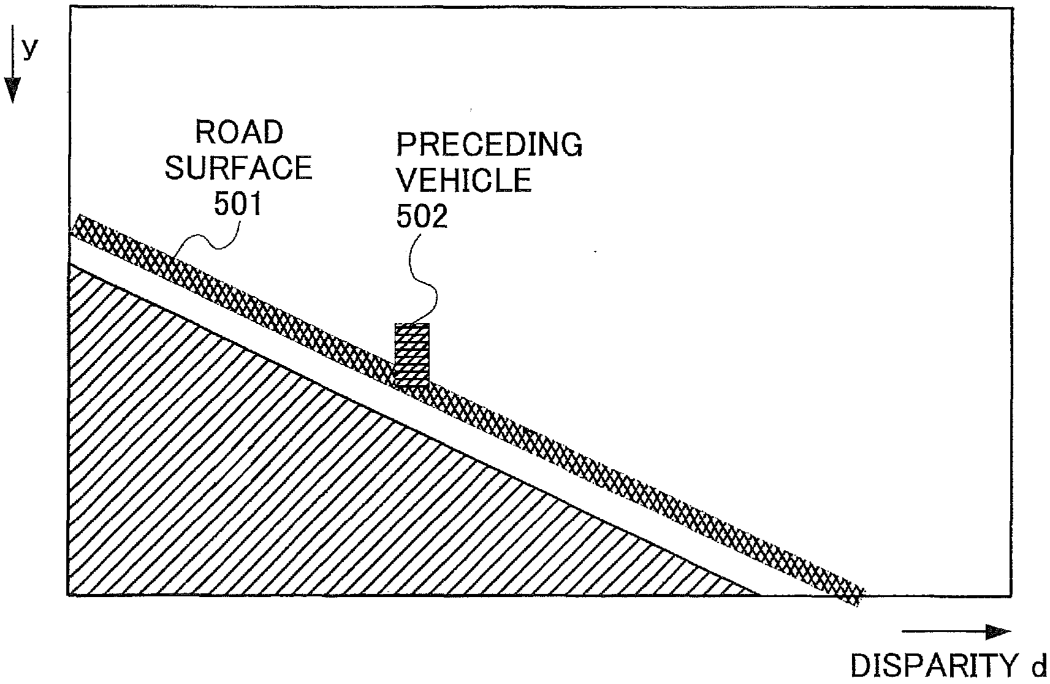
y
ROAD
SURFACE
501
PRECEDING
VEHICLE
502
DISPARITY d

FIG.7

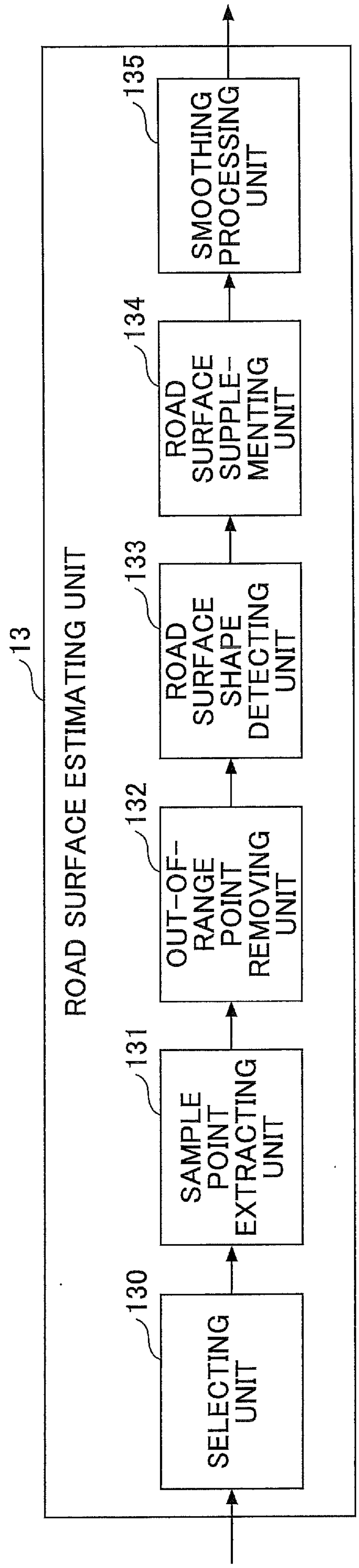
13
ROAD SURFACE ESTIMATING UNIT
130
SELECTING UNIT
131
SAMPLE POINT EXTRACTING UNIT
132
OUT-OF-RANGE POINT REMOVING UNIT
133
ROAD SURFACE SHAPE DETECTING UNIT
134
ROAD SURFACE SUPPLE-MENTING UNIT
135
SMOOTHING PROCESSING UNIT

FIG.8

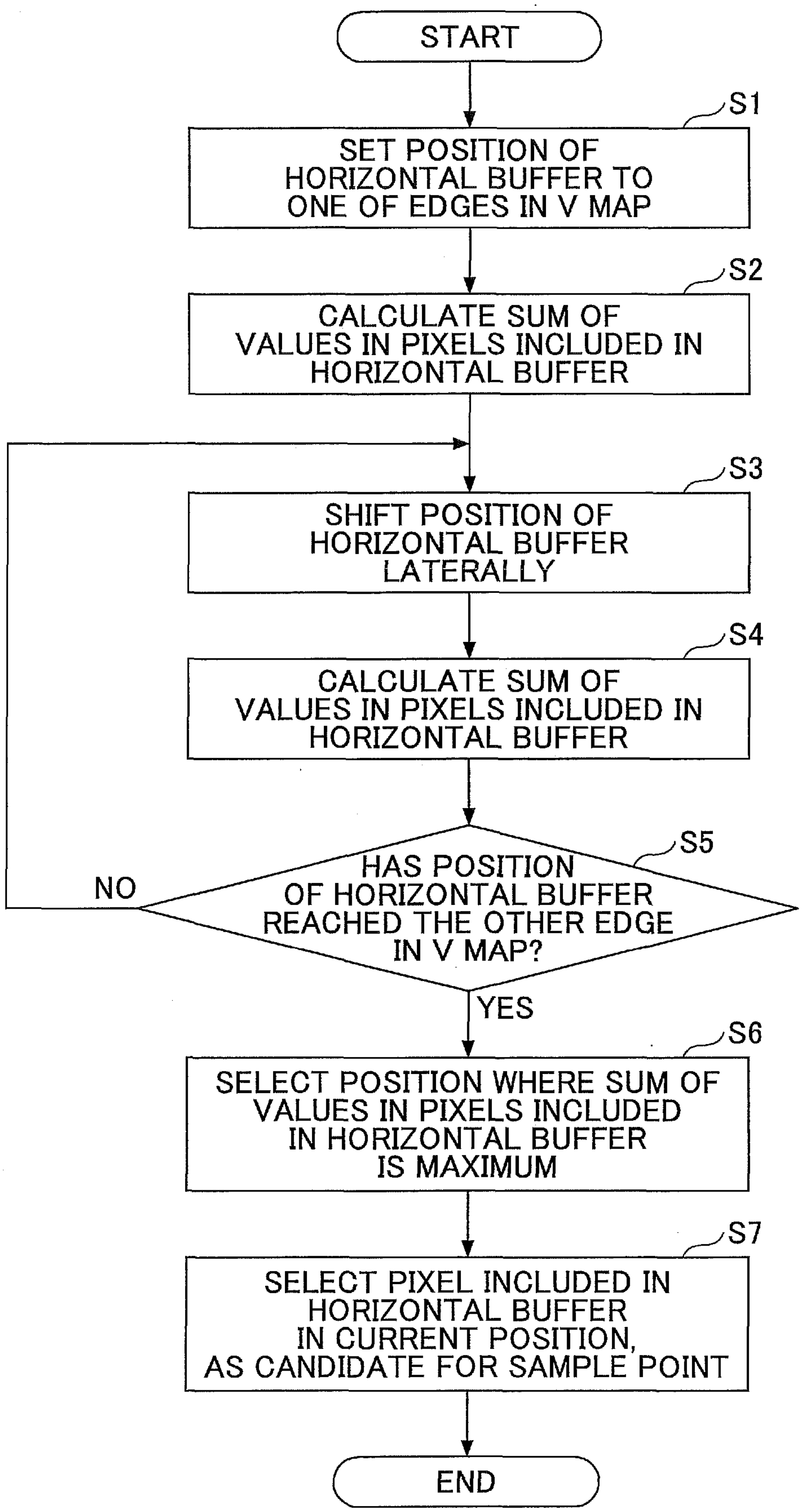
START
S1
SET POSITION OF HORIZONTAL BUFFER TO ONE OF EDGES IN V MAP
S2
CALCULATE SUM OF VALUES IN PIXELS INCLUDED IN HORIZONTAL BUFFER
S3
SHIFT POSITION OF HORIZONTAL BUFFER LATERALLY
S4
CALCULATE SUM OF VALUES IN PIXELS INCLUDED IN HORIZONTAL BUFFER
S5
HAS POSITION OF HORIZONTAL BUFFER REACHED THE OTHER EDGE IN V MAP?
NO
YES
S6
SELECT POSITION WHERE SUM OF VALUES IN PIXELS INCLUDED IN HORIZONTAL BUFFER IS MAXIMUM
S7
SELECT PIXEL INCLUDED IN HORIZONTAL BUFFER IN CURRENT POSITION, AS CANDIDATE FOR SAMPLE POINT
END

FIG.9A

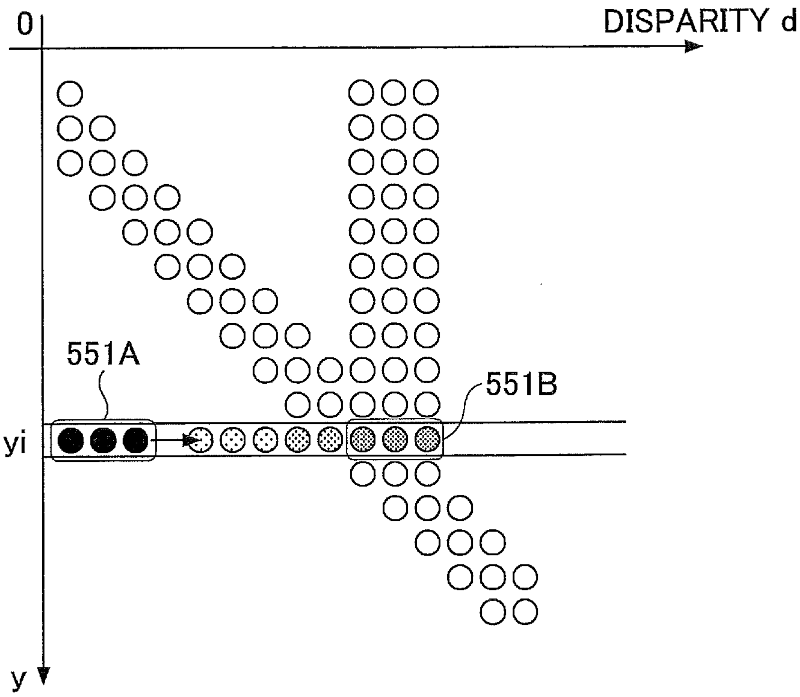


FIG.9B

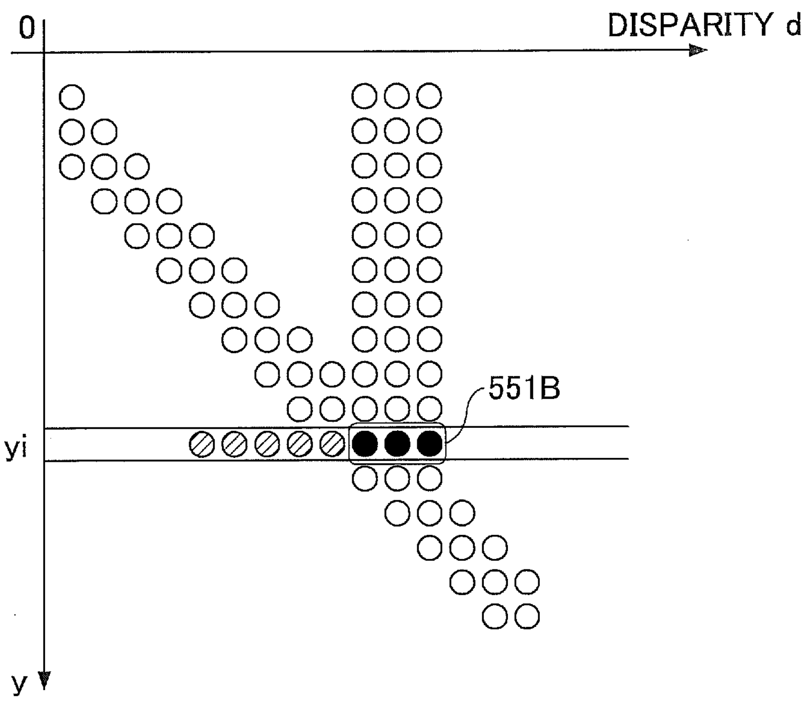

FIG.10

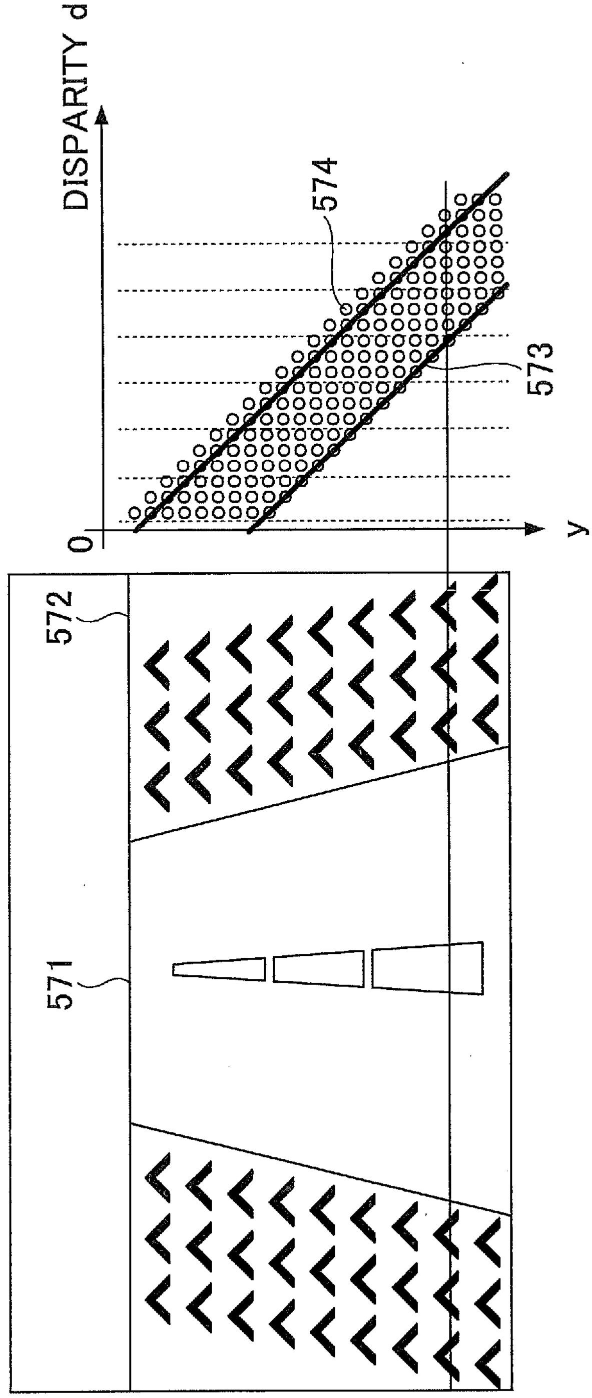

FIG.11

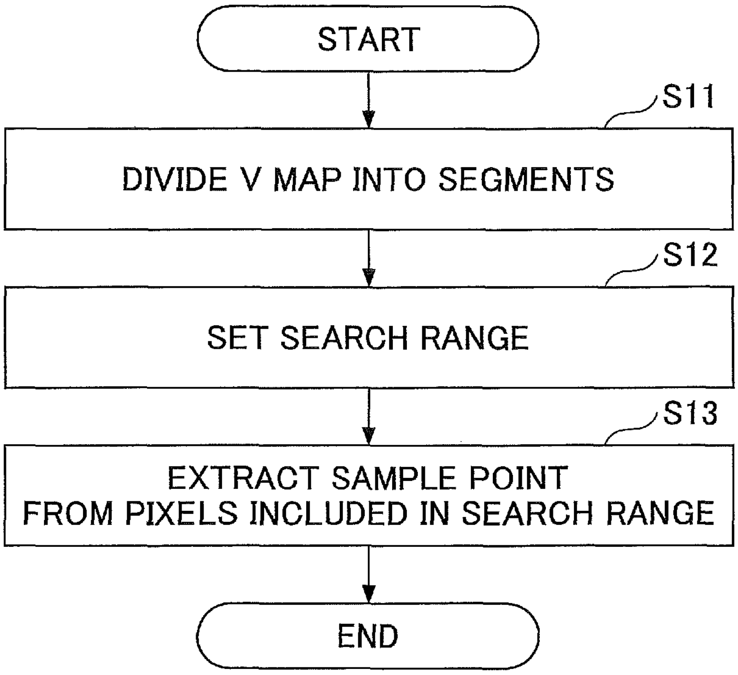
START
S11
DIVIDE V MAP INTO SEGMENTS
S12
SET SEARCH RANGE
S13
EXTRACT SAMPLE POINT
FROM PIXELS INCLUDED IN SEARCH RANGE
END

FIG.12

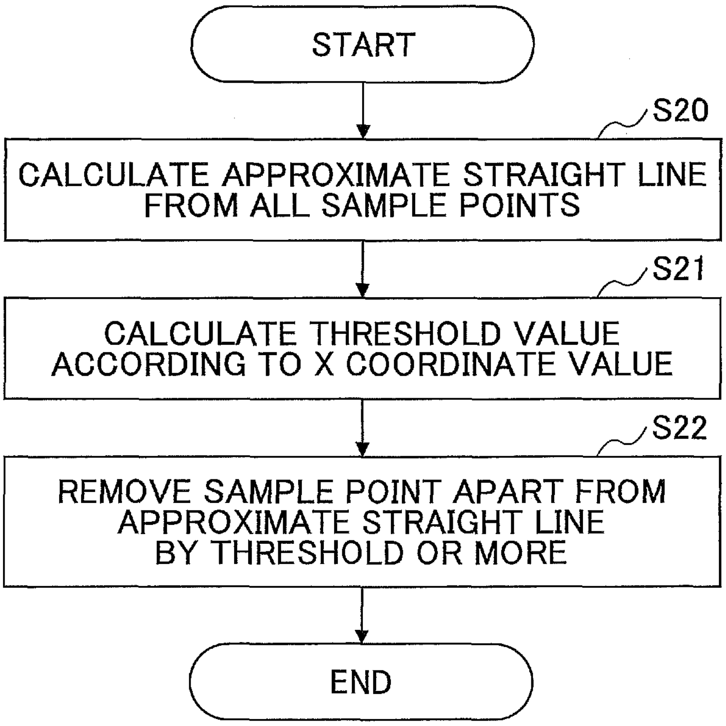
START
S20
CALCULATE APPROXIMATE STRAIGHT LINE
FROM ALL SAMPLE POINTS
S21
CALCULATE THRESHOLD VALUE
ACCORDING TO X COORDINATE VALUE
S22
REMOVE SAMPLE POINT APART FROM
APPROXIMATE STRAIGHT LINE
BY THRESHOLD OR MORE
END

FIG.13

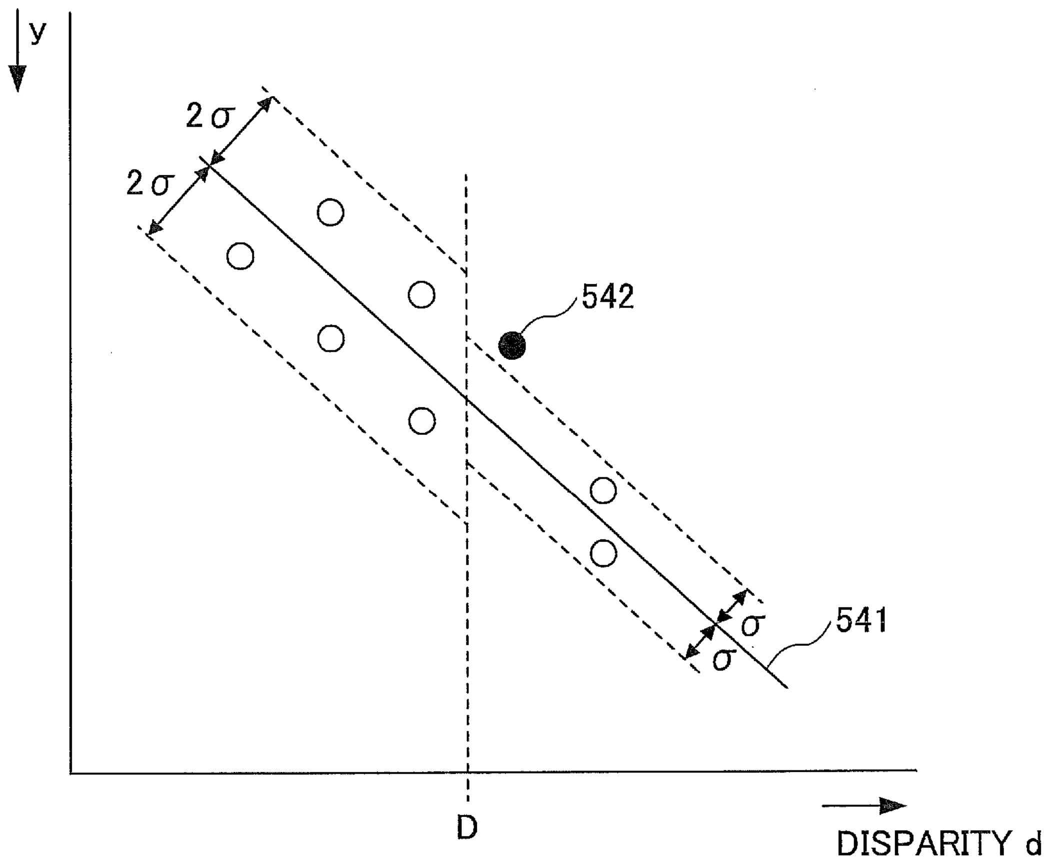

FIG.14

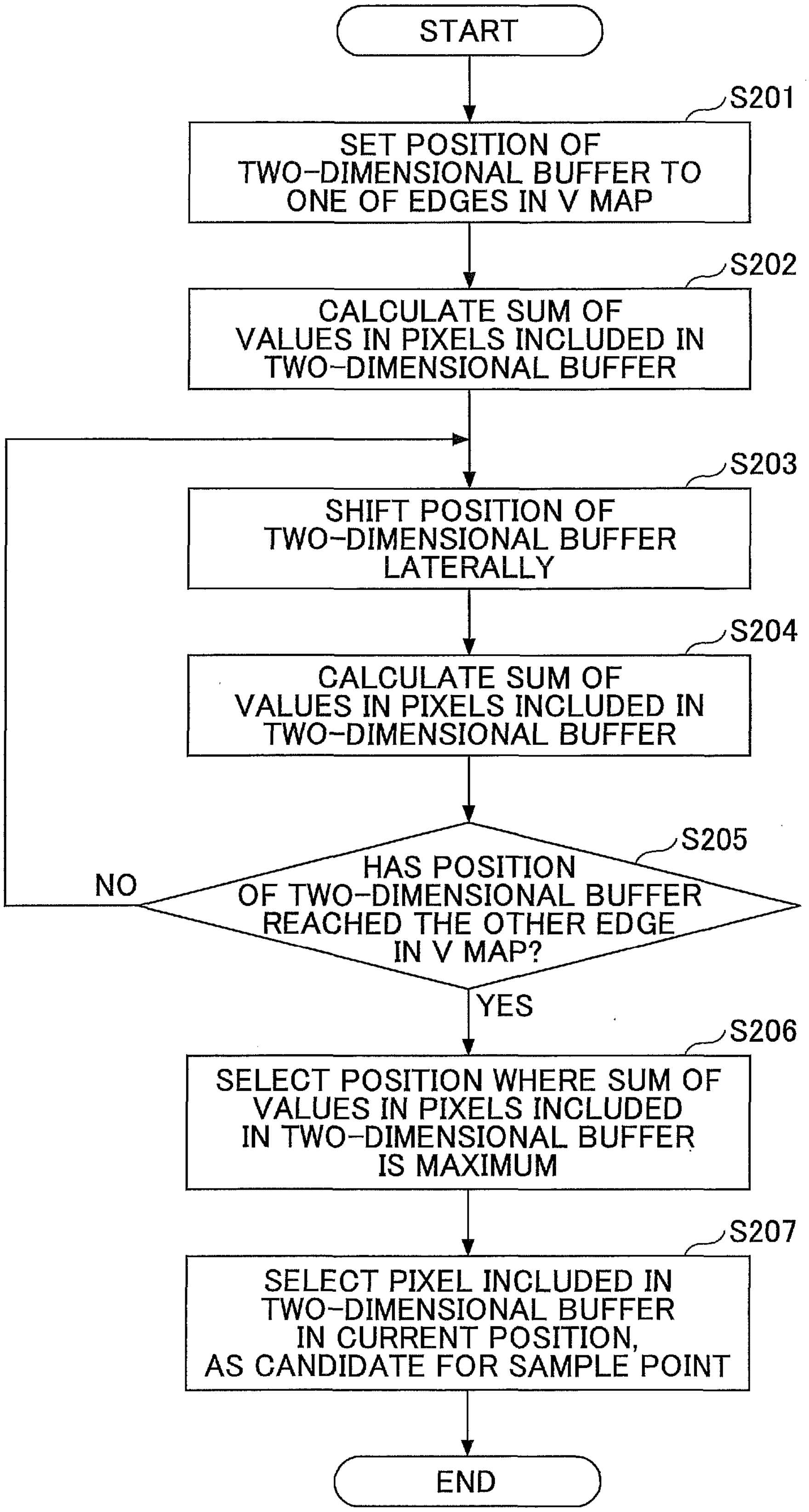
START
S201
SET POSITION OF TWO-DIMENSIONAL BUFFER TO ONE OF EDGES IN V MAP
S202
CALCULATE SUM OF VALUES IN PIXELS INCLUDED IN TWO-DIMENSIONAL BUFFER
S203
SHIFT POSITION OF TWO-DIMENSIONAL BUFFER LATERALLY
S204
CALCULATE SUM OF VALUES IN PIXELS INCLUDED IN TWO-DIMENSIONAL BUFFER
S205
HAS POSITION OF TWO-DIMENSIONAL BUFFER REACHED THE OTHER EDGE IN V MAP?
NO
YES
S206
SELECT POSITION WHERE SUM OF VALUES IN PIXELS INCLUDED IN TWO-DIMENSIONAL BUFFER IS MAXIMUM
S207
SELECT PIXEL INCLUDED IN TWO-DIMENSIONAL BUFFER IN CURRENT POSITION, AS CANDIDATE FOR SAMPLE POINT
END

FIG.15A

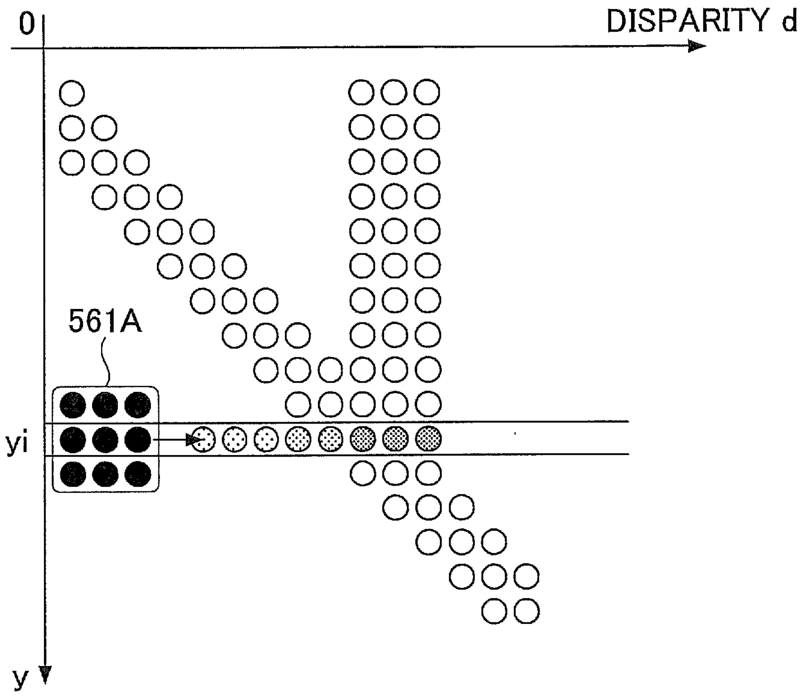


FIG.15B

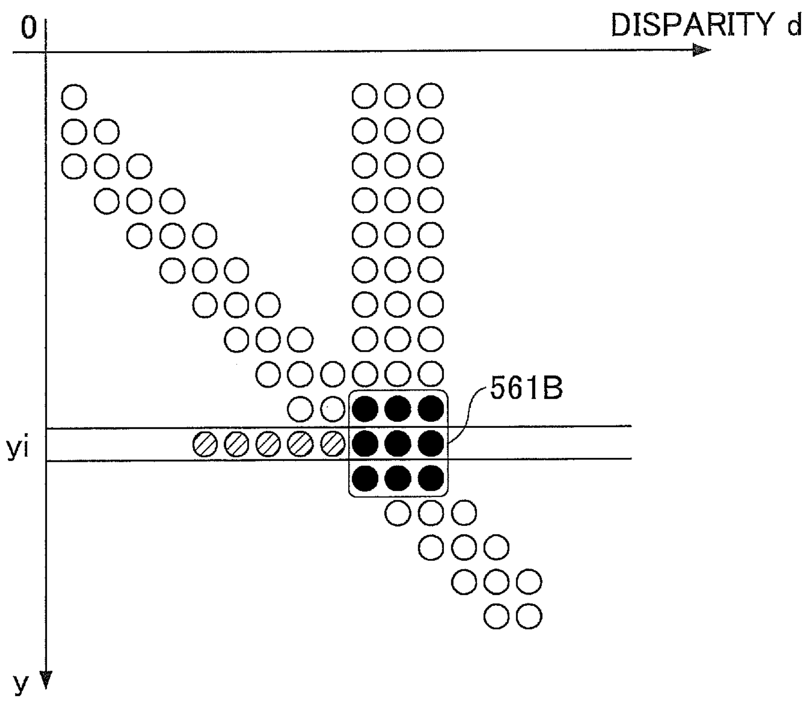

FIG.16

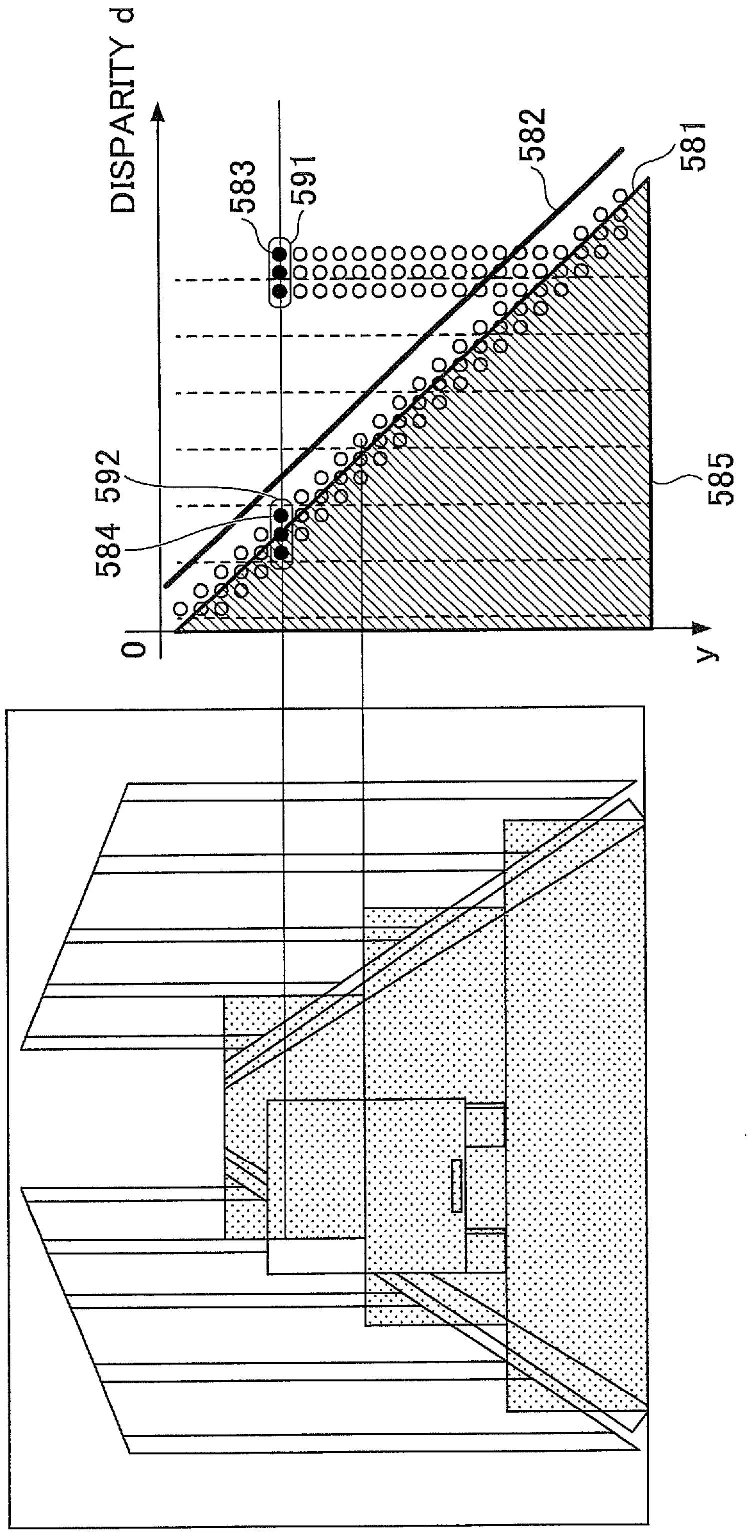

FIG.17

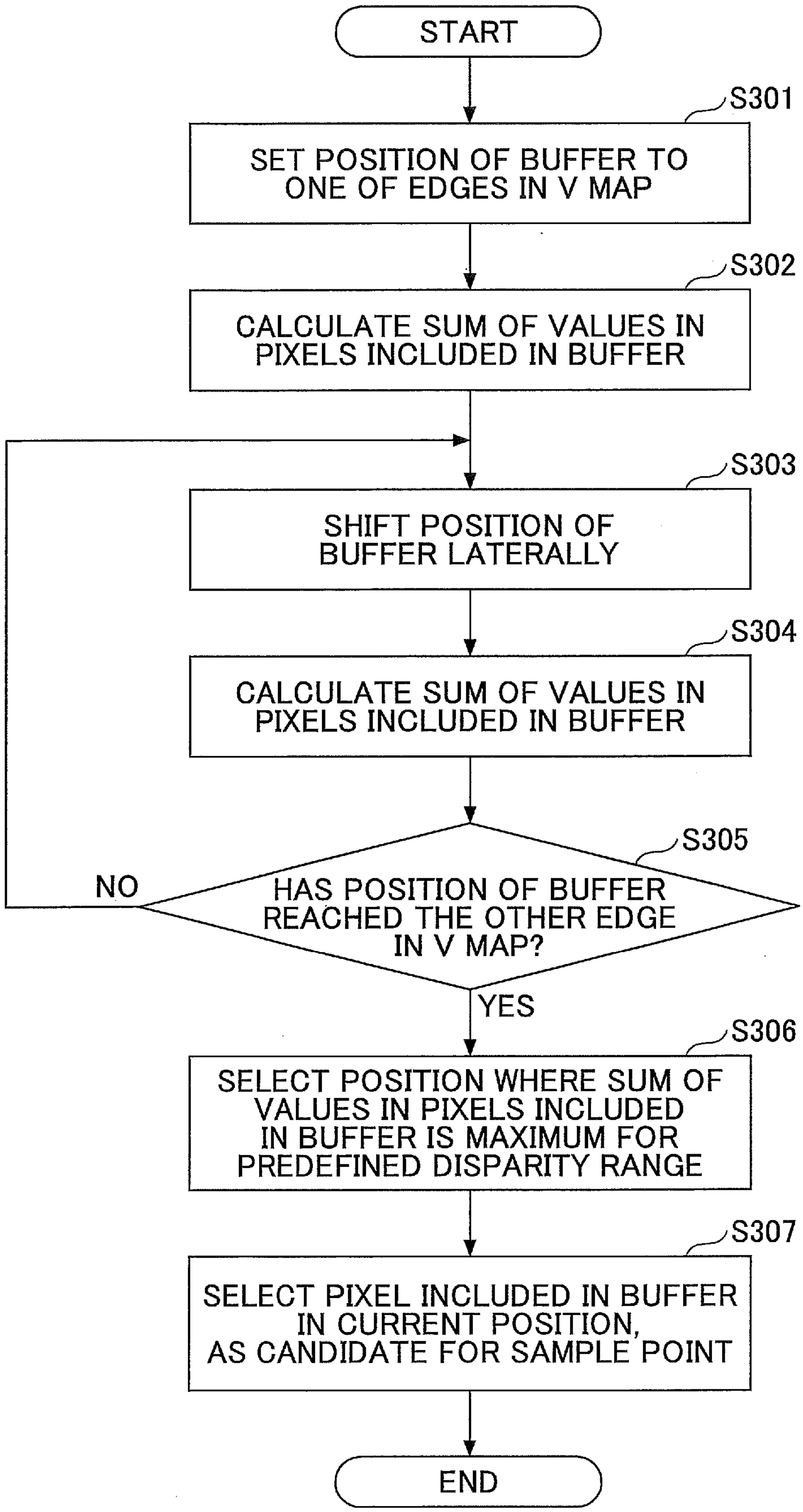
START
S301
SET POSITION OF BUFFER TO ONE OF EDGES IN V MAP
S302
CALCULATE SUM OF VALUES IN PIXELS INCLUDED IN BUFFER
S303
SHIFT POSITION OF BUFFER LATERALLY
S304
CALCULATE SUM OF VALUES IN PIXELS INCLUDED IN BUFFER
S305
HAS POSITION OF BUFFER REACHED THE OTHER EDGE IN V MAP?
NO
YES
S306
SELECT POSITION WHERE SUM OF VALUES IN PIXELS INCLUDED IN BUFFER IS MAXIMUM FOR PREDEFINED DISPARITY RANGE
S307
SELECT PIXEL INCLUDED IN BUFFER IN CURRENT POSITION, AS CANDIDATE FOR SAMPLE POINT
END

FIG.18A

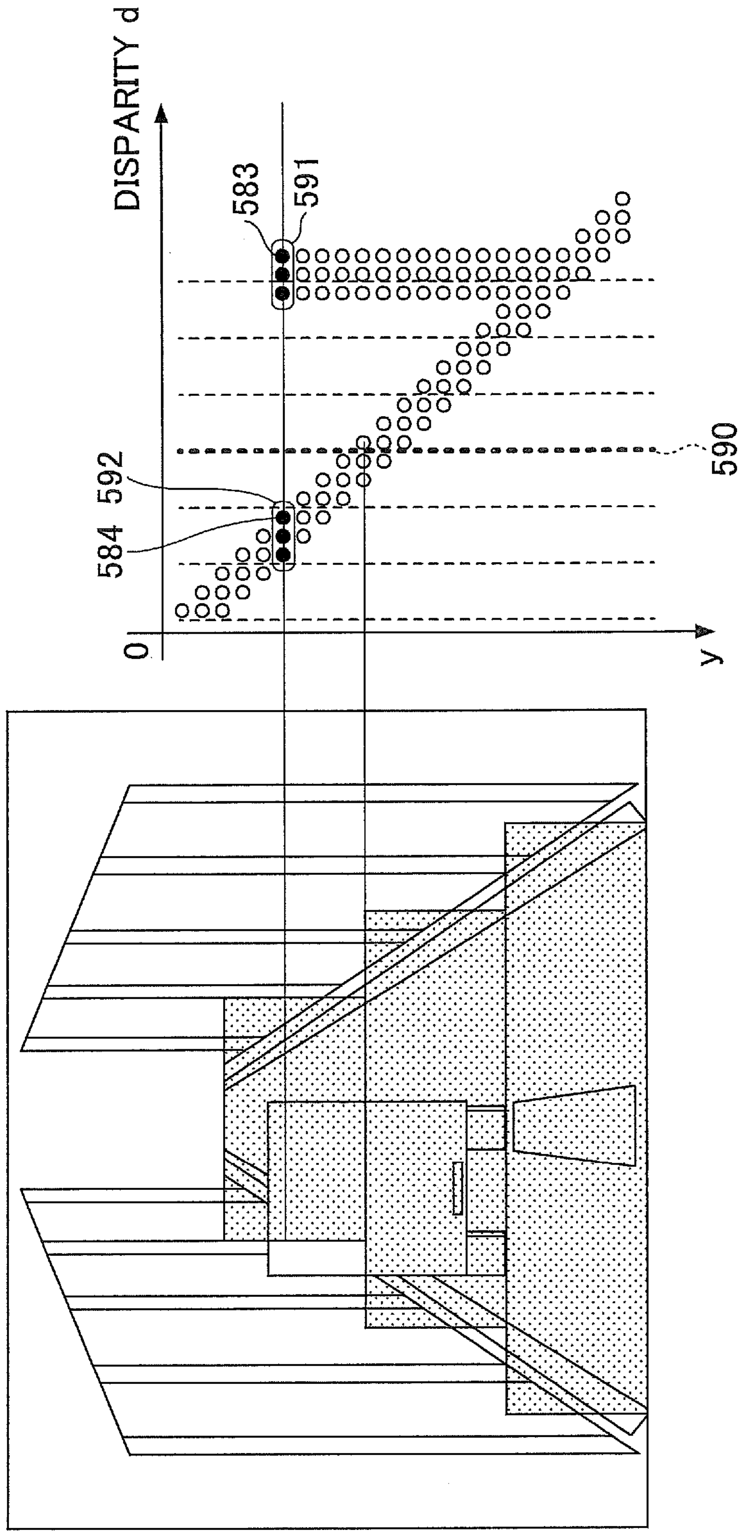

FIG.18B

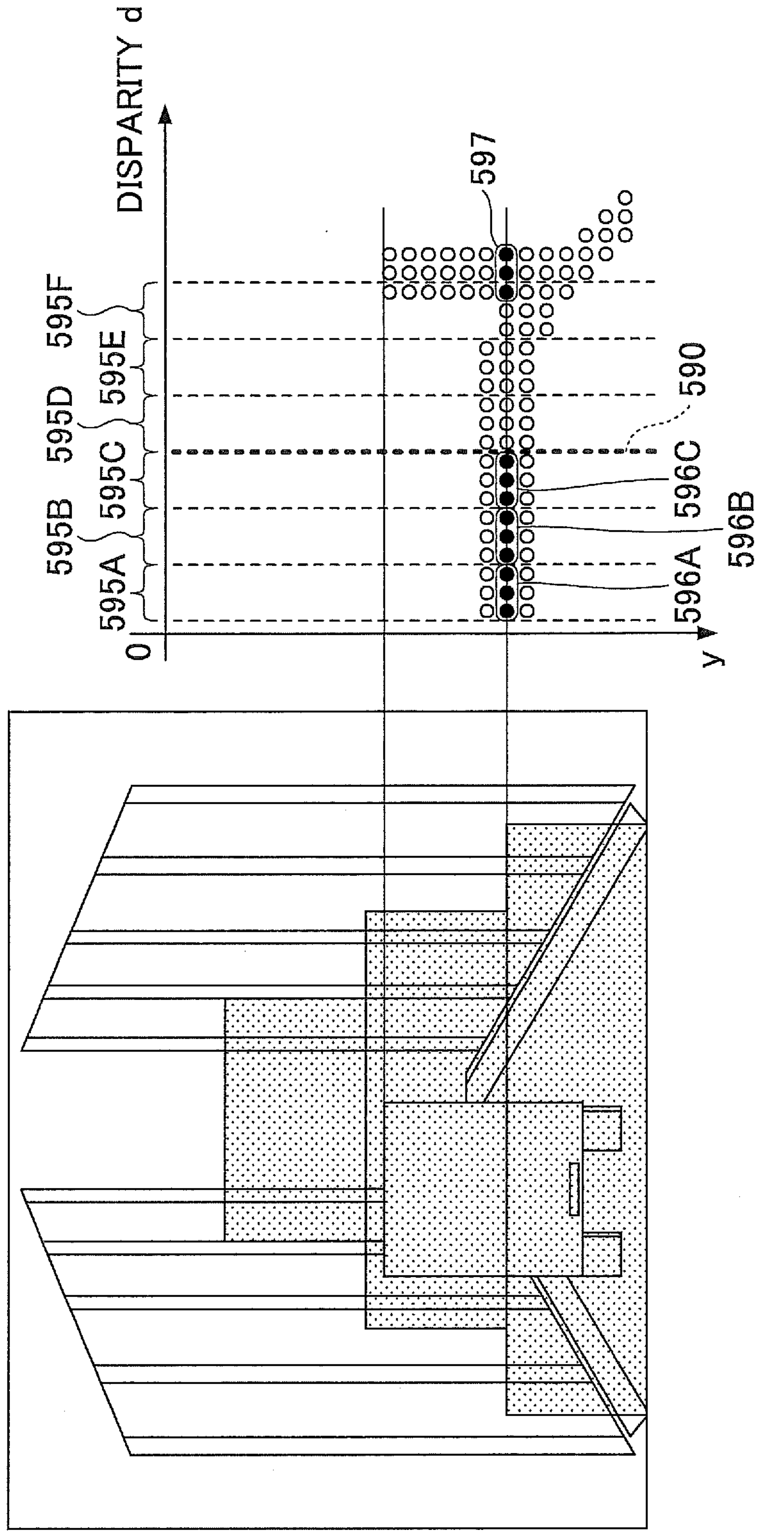
DISPARITY d
0
y
595A
595B
595C
595D
595E
595F
596A
596B
596C
597
590

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011128844 A
- EP 3057063 A1
- US 2016014406 A1